# EUROPEAN PATENT SPECIFICATION

(11) **EP 4 101 296 B1**
(45) Date of publication and mention of the grant of the patent: **15.04.2026**
(21) Application number: 20917913.4
(22) Date of filing: 09.03.2020
(51) Int. Cl.: A01N 1/126

(54) **NORMOTHERMIC MACHINE ORGAN PERFUSION FLUID AND PREPARATION METHOD THEREFOR**
NORMOTHERME MASCHINENORGANPERFUSIONSFLÜSSIGKEIT UND VERFAHREN ZU IHRER HERSTELLUNG
FLUIDE DE PERFUSION MÉCANIQUE D'ORGANE NORMOTHERMIQUE ET SON PROCÉDÉ DE PRÉPARATION

(30) Priority: 07.02.2020 CN 202010082394
(43) Date of publication of application: 14.12.2022
(73) Proprietor: Bios (Changzhou) Biotechnology Co., Ltd., Changzhou City, Jiangsu Province 213212 (CN)
(72) Inventor: YOU, Kewei, Beijing 100176 (CN); CHEN, Haoyuan, Beijing 100176 (CN)
(74) Representative: Casalonga
(86) International application number: PCT/CN2020/078383
(87) International publication number: WO 2021/155620

(56) References cited:
- CN-A- 101 200 499
- CN-A- 101 897 329
- CN-A- 105 288 627
- CN-A- 110 563 836
- CN-A- 110 563 836
- JP-A- 2018 501 257
- VENKATAREDDY NADITHE ET AL: "Poly(ethylene glycol) cross-linked hemoglobin with antioxidant enzymes protects pancreatic islets from hypoxic and free radical stress and extends islet functionality", BIOTECHNOLOGY AND BIOENGINEERING, JOHN WILEY, HOBOKEN, USA, vol. 109, no. 9, 8 April 2012 (2012-04-08), pages 2392 - 2401, XP071165926, ISSN: 0006-3592, DOI: 10.1002/BIT.24501
- XIE CAIXIA;AN LIANG;WEI CHUNHUA;LI XIAOJING;DU XIAOHONG;LI JIAXIN;SU YAN: "Study on the Interaction Between Hemoglobin and Peroxiredoxin 2 Using Slectrophoresis Release Test", CHINESE JOURNAL OF BLOOD TRANSFUSION, vol. 28, no. 12, December 2015 (2015-12-01), pages 1444 - 1447, XP055917294, ISSN: 1004-549x, DOI: 10.13303/j.cjbt.issn.1004-549x.2015.12.006
- AN, LIANG: "Interactions between Hemoglobin and Other Proteins were Proved by the Electrophoresis Release Test and Co-Immunoprecipitation", MASTER THESIS, 1 March 2015 (2015-03-01), pages 1 - 72, XP009529572

## Description

### Technical Field

The present invention relates to the field of medical devices, in particular to a normothermic mechanical organ perfusion fluid and a preparation method thereof.

### Background Art

Many human diseases are caused by necrosis of cells, tissues and organs, thereby leading to loss of function and inducing body disability, and even death. With the development of modern medicine, the technology of organ transplantation is maturing. From the perspective of surgery alone, the technology of organ transplantation has become perfect, and even head replacement surgery is not a big problem. Nevertheless, organ transplantation still faces various difficulties, and the preservation of isolated organs is one of them. Organ transplantation requires the transplantation of living organs. Therefore, it is a prerequisite for the success of transplantation that the organ for transplantation maintains its complete anatomical structure and activity from the time when it leaves the donor to the time when its main blood vessels are connected with the recipient's blood vessels. However, once an organ loses its blood supply, its cells cannot get the necessary oxygen and nutrients, it will die in a short period of time at room temperature. Its tolerance time is extremely short, for example, the tolerance time of heart and liver is only 10 to 15 minutes, and that of kidney is about 45 to 60 minutes. If the above time limit is exceeded, it is difficult to restore function after transplantation. In clinical practice, it is required that the ischemic time at room temperature should be as short as possible, preferably no more than 3 to 5 minutes, and no more than 7 to 8 minutes at the longest. However, it is impossible to complete the transplant in such a short period of time. Therefore, it is necessary to maintain the activity of the isolated organs for a long time.

In order to extend the preservation time of isolated organs, scientists have explored a variety of methods. Among them, cryopreservation is one of the more commonly used methods. Although it can effectively extend the preservation time of organs, cryopreservation has obvious damage to cells. Under normal circumstances, cells are immersed in an extracellular fluid with high sodium and low potassium, and the Na-K ATPase (Na pump) in the cell membrane balances the ratio of sodium to potassium inside and outside the cell. The exchange of sodium and potassium is powered by oxidative phosphorylation. When the metabolism is inhibited, the Na pump cannot get ATP supply, and the intracellular proteins produce colloidal osmotic pressure, which causes cell edema. Intracellular proteins and impermeable anions produce an osmotic tension of about 110-140 mOsm/kg. During cold ischemia and inhibition of Na pump activity, the cell membrane potential decreases. Then Na and Cl enter the cell due to the concentration gradient. In order to maintain the water balance between the inner and outer sides of the semipermeable membrane, the water accumulates in the cell and causes cell edema.

Furthermore, the use of perfusion to extend the preservation of isolated organs is also a common method. At present, the commonly used perfusion fluids include Krebs-Henseleit fluid, St Thomas II fluid, UW fluid and Celsior fluid, etc., but these perfusion fluids lack oxygen-carrying agents, so that the perfused organs are always at hypoxic condition. If the extracorporeal perfusion fluid cannot effectively supply oxygen to the isolated organs, tissues and cells will subject to the increased anaerobic glycolysis due to hypoxia, resulting in acidosis and insufficient lysosomal enzyme activation. The problem to be solved urgently in the preservation of organs is how to ensure the oxygen supply, maintain the minimum energy metabolism, and eliminate metabolic waste.

At the same time, organs preserved under anaerobic conditions will subject to significant secondary damage during transplantation and reperfusion. The mechanism of accentuating damage of preserved organs during restoring blood flow is not fully understood. It is generally believed that this is related to the damage caused by oxygen free radicals. Under normal circumstances, hypoxanthine, a metabolite of ATP, is rapidly converted into purine by xanthine oxidase (XOD) and then into the intermediate product uric acid. However, in the case of severe hypoxia, the energy-rich bonds are quickly exhausted, the content of hypoxanthine increases, and XOD is transformed into an enzyme that can produce peroxide. At the same time, hypoxia also inactivates or depletes endogenous antioxidants such as superoxide dismutase (SOD). When the blood circulation rebuilds oxygen supply, excessive free radicals will be generated to damage cells.

Therefore, it is particularly important to add an oxygen-carrying agent into the organ perfusion fluid. Red blood cells are the natural oxygen carriers in animals, and they were once used directly for in vitro perfusion preservation of organs. However, red blood cells are prone to rupture, and the extravasation of aminophospholipids, endotoxin, glycophorin and intracellular enzymes in the membrane may damage the vascular endothelium and myocardial cells and cause capillary blockage.

Hence, it is a new idea to use stromal-free hemoglobin to replace red blood cells. Hemoglobin is a protein with oxygen-carrying function in red blood cells, has a spherical structure and a molecular weight of 64.5kKD. After years of research by Pemtz et al., the structure and function of hemoglobin have now been thoroughly understood. Hemoglobin is composed of four polypeptide chains (subunits), which are held together by non-covalent interactions. The main component of human whole blood is hemoglobin A, its structure is α2β2, in which the α chain contains 141 amino acid residues, and the β chain contains 146 amino acid residues. The α chain and β chain combine in a tighter manner to form a dimer, and the two αβ dimers combine in a looser manner to form a hemoglobin molecule. The main function of hemoglobin in the body is to transport oxygen, part of carbon dioxide and hydrogen ions. Each chain of the four subunits contains a heme prosthetic group that can bind to oxygen in a reversible manner. A Hb tetramer can bind four oxygen molecules in total. The four hemes are located in the cracks close to the surface of the hemoglobin molecule, and the hemes are almost always surrounded by non-polar residues except the two histidine residues. The iron atom in heme is combined with the four oxygen atoms of protoporphyrin ring at the heme plane center, and on both sides of the heme plane, the iron atom can also form two bonds, which become the fifth and sixth coordination sites. The fifth coordination site of the iron atom in heme binds to the F8 histidine residue (His at position 87 in the α chain, or His at position 92 in the β chain) located on one side of the heme plane, and this F8His is proximal His. Another histidine residue E7His (His at position 58 in the α chain, or His at position 67 in the β chain) is located near the sixth coordination site of the iron atom on the other side of the heme plane, that is, the telecentric His. E7His does not combine with the iron atom, the gap between E7His and the iron atom is the position where oxygen binds to the iron. It is empty at the corresponding position of deoxyhemoglobin, O2 can diffuse into this space and bind to the sixth coordination site of the iron atom, while E7His can bind to oxygen via hydrogen bond. The heme iron in hemoglobin can be Fe²⁺ or Fe³⁺, and only Fe²⁺ can bind to oxygen, while the hemoglobin with Fe³⁺ is called methemoglobin and does not have the function of binding O₂.

There is a synergistic effect between the various O₂ binding sites in the hemoglobin molecule. The binding of O₂ to one subunit can promote the binding of O₂ to the remaining subunits of the tetramer. On the contrary, the release of O₂ from one subunit of oxyhemoglobin can promote the release of O₂ from the remaining subunits. This synergistic effect is called the Hill effect. In mature red blood cells, the interaction of oxyhemoglobins can be described by an oxygen dissociation curve. Under standard conditions, the partial pressure of oxygen is P₅₀ when the total hemoglobin saturation is 50%. Under normal physiological conditions, the P₅₀ of whole blood is approximately 26 Torr. When the oxygen affinity of hemoglobin increases so that it is difficult for oxygen molecules to dissociate from hemoglobin, the oxygenation curve shifts to the left and P₅₀ decreases, that is, the oxygen required for 50% of hemoglobin to be saturated with oxygen is reduced, but it is more difficult for oxygen to be dissociated from hemoglobin.

2,3-Diphosphoglycerate (2,3-DPG) can significantly affect the oxygen affinity of hemoglobin, it exists in the red blood cells of human and many other animals, and its concentration is about the same as that of hemoglobin. In the absence of 2,3-DPG, hemoglobin has a high affinity to oxygen and a low P₅₀. 2,3-DPG is a highly polar molecule with a small molecular weight, but bears 5 negative charges, and it is a rare molecule with high charge density in the metabolic intermediates. It binds to hemoglobin in a ratio of 1:1, and binds to the axisymmetric center cavity of the hemoglobin molecule, just filling the original gap. 2,3-DPG affects the oxygen affinity of hemoglobin by binding to deoxyhemoglobin. In the process of hemoglobin oxygenation, 2,3-DPG affects the conformation of hemoglobin, so that hemoglobin tends to a tense state (T state), reducing its affinity to O₂.

The free hemoglobin separated and purified from red blood cells loses 2,3-DPG, so it has a high oxygen affinity, and it is difficult to release the bound oxygen molecules in tissues. At the same time, free hemoglobin loses the protection of red blood cell membrane and intracellular reductase system (e.g., superoxide dismutase, thioredoxin, glutathione peroxidase, thioredoxin peroxidase, etc.), and thus will quickly dissociate into dimers, and be oxidized into methemoglobin, which is then excreted from the body through kidney, causing hemoglobinuria and, in severe cases, renal failure. In addition, free hemoglobin will also impose additional colloidal osmotic pressure, and under normal physiological osmotic pressure, the concentration of hemoglobin is only 7g/dL, which greatly reduces the oxygen-carrying capacity. Therefore, the free hemoglobin separated from red blood cells cannot be directly used as a substitute for red blood cells because of its strong affinity for oxygen, poor stability, and low oxygen-carrying capacity.

In order to increase the stability of hemoglobin, prevent the rapid dissociation of free hemoglobin tetramer to eliminate nephrotoxicity, and reduce oxygen affinity at the same time, research and development of artificial polymerized hemoglobin emerged abroad around the 1960s. Hemoglobin is subjected to chemical modification methods such as intramolecular crosslinking, intermolecular polymerization, and covalent connection with macromolecules to form various hemoglobin derivatives, which makes macromolecularization of hemoglobin so as to fulfill the purpose of increasing stability, improving oxygen-carrying capacity, and reducing colloidal osmotic pressure.

The company previously obtained highly active oxygen-carrying polymerized hemoglobin through glutaraldehyde polymerization (patent application number: CN201910846580.9, patent application number: CN110563836A), which is added to an organ perfusion fluid to meet the oxygen demand of the organ's normothermic metabolism, thereby solving the problem that organs cannot be preserved for a long time at room temperature under hypoxic condition, increasing the preservation time of organs at room temperature. However, it sometimes still cannot meet the requirement of actual clinical preservation time. For example, if the donor and the patient receiving the donation are in different cities far away, or the time of donation and the time of receiving the donation are inconsistent, the organ may not be used for transplantation due to inactivation, and this time limit has become a major cause of the crisis of donor organ shortage, making it difficult for many patients to receive transplant.

Therefore, it is necessary to further increase the preservation time of isolated organs at room temperature.

### Contents of the Invention

The present application is based on the present inventors' discovery and understanding for the following facts and problems:
The stability of glutaraldehyde polymerized hemoglobin as a red blood cell substitute is extremely important. If it is used as a drug in clinical medicine, stability is even more important. Therefore, the stability of glutaraldehyde polymerized hemoglobin (i.e., preventing the degradation of polymerized hemoglobin into free hemoglobin) is the first problem to be solved in the development of red blood cell substitutes.

In order to solve the above-mentioned problem, the present inventors discovered through a large number of experiments that in the organ perfusion fluid of the present application, the synergistic combination of polymerized hemoglobin with thioredoxin peroxidase significantly reduces the degradation rate of the polymerized hemoglobin, and significantly enhances the stability of polymerized hemoglobin, thereby significantly prolonging the time that the polymerized hemoglobin exerts oxygen-carrying function, and significantly prolonging the preservation time of isolated organs. In addition, the synergistic combination of thioredoxin peroxidase II with polymerized hemoglobin in the perfusion fluid can also play an important role in regulating the production and elimination of nitric oxide in tissue, and these characteristics effectively neutralize the side effects of the polymerized hemoglobin in this aspect, and the organ activity indicators such as NO and ET-1 can be maintained in the normal range for a longer time.

In particular, it should be noted that although some studies in the prior art have preliminarily proved that in human red blood cells, thioredoxin peroxidase may combine with hemoglobin by conformational changes under the influence of a variety of complex factors (e.g., pH, salt concentration, etc.) to prevent oxidative damage of hemoglobin; however,
first, the current research is not in-depth, that is, how the two are combined and what is the strength of the acting force are still inconclusive;
second, intracellular and extracellular (in vitro) environments of red blood cells are two completely different environments, and after loss of protection of cell membrane and without the assistance of the complex environment in red blood cell, it is completely unpredictable whether free hemoglobin and thioredoxin peroxidase can still combine with each other under in vitro environment,
third, as compared with free hemoglobin, the spatial structure and reaction sites of polymerized hemoglobin have been significantly changed, and under this premise, it is impossible to predict whether thioredoxin peroxidase can still combine and interact with polymerized hemoglobin under in vitro environment,
fourth, researches in the prior art only show that thioredoxin peroxidase can combine with free hemoglobin in red blood cells to prevent oxidative damage of hemoglobin, however, in the organ perfusion fluid of the present application, it is completely unpredictable whether thioredoxin peroxidase can act synergistically with polymerized hemoglobin, which has a huge structural difference compared to the free hemoglobin, so as to play a new function that is significantly different from its conventional antioxidant effect, that is, to prevent the degradation of polymerized hemoglobin into free hemoglobin and enhance the stability of polymerized hemoglobin;
fifth, the inventors find that in comparison with the perfusion fluid added with only polymerized hemoglobin, when superoxide dismutase or thioredoxin that also belongs to the red blood cell reductase system is combined with polymerized hemoglobin, there is almost no extension in the organ preservation time, but in the perfusion fluid of the present application, the synergistic combination of polymerized hemoglobin with thioredoxin peroxidase can be effectively achieved, which significantly prolongs the preservation time of the isolated organ.

It can be seen that, as compared with the prior art, the perfusion fluid for isolated organ of the present application is non-obvious, has achieved unexpected technical effects, and has made a substantial contribution to the prior art.

To this end, in the first aspect of the present invention, the present invention provides a perfusion fluid for isolated organ, which is composed of the following substances based on a total volume of 1000 mL:
polymerized hemoglobin: 20 to 40 g, such as 25g, 30g or 35g;
thioredoxin peroxidase: 4 to 10 g, such as 6g, 6.7g or 8g;
heparin sodium: 20000 to 30000 u, such as 23000u, 25000u or 27000u;
glucose: 8 to 10 g, such as 8.5g, 9g or 9.5g;
sodium chloride: 6 to 8 g, such as 6.5g, 7g or 7.5g;
cefoxitin sodium: 1 to 3 g, such as 1.5g, 2g or 2.5g;
sodium bicarbonate: 1 to 1.5g, such as 1g, 1.25g or 1.5g;
10% compound amino acid injection: 40 to 60 mL, such as 45mL, 50mL or 55mL;
12 vitamins for injection: 0.1 to 0.3 mL, such as 0.15mL, 0.2mL or 0.25mL; and
balance of water;
wherein, the polymerized hemoglobin is obtained by the following method:
   filtering blood with a 60µm depth filter to obtain red blood cells; washing the red blood cells by use of a 0.65µm hollow fiber membrane; lysing the washed red blood cells with a hypotonic solution to obtain a lysate; allowing the lysate to undergo 100KD ultrafiltration to obtain a crude pure hemoglobin; purifying the crude pure hemoglobin with an anion exchange chromatography to obtain a pure hemoglobin; allowing the pure hemoglobin to undergo polymerization reaction with glutaraldehyde by an atomization method; terminating the polymerization reaction with sodium borohydride, and performing 30KD ultrafiltration to exchange liquid to obtain the polymerized hemoglobin.

In some embodiments, based on per 1 g of thioredoxin peroxidase, the perfusion fluid for isolated organ comprises:
polymerized hemoglobin: 4 to 5g, such as 4.3g, 4.5g or 4.7g;
thioredoxin peroxidase: 1 g;
heparin sodium: 3000 to 5000 u, such as 3500u, 3700u, 4000u, 4500u or 4700u;
glucose: 1 to 2 g, such as 1.3g, 1.5g or 1.7g;
sodium chloride: 0.8 to 1.5g, such as 1.0g, 1.2g or 1.4g;
cefoxitin sodium: 0.25 to 0.3g, such as 0.26g, 0.27g, 0.28g or 0.29g;
sodium bicarbonate: 0.15 to 0.25g, such as 0.17g, 0.18g, 0.19g, 0.20g, 0.21g, 0.22g or 0.23g;
10% compound amino acid injection: 6 to 10 mL, such as 7.5mL, 8mL, 8.5mL, 9mL or 9.5mL;
12 vitamins for injection:0.025 to 0.03 mL, such as 0.026mL, 0.027mL, 0.028mL or 0.029mL.

In some embodiments, based on a total volume of 1000 mL, the perfusion fluid for isolated organ is composed of the following substances:
polymerized hemoglobin: 30 g,
thioredoxin peroxidase: 6.7 g,
heparin sodium: 25000 u,
glucose: 9 g,
sodium chloride: 7 g,
cefoxitin sodium: 2 g,
sodium bicarbonate: 1.25g,
10% compound amino acid injection: 50 mL,
12 vitamins for injection: 0.2 mL, and
balance of water.

In some embodiments, based on a total volume of 1000 mL, the perfusion fluid for isolated organ is composed of the following substances:
polymerized hemoglobin: 40 g,
thioredoxin peroxidase: 10 g,
heparin sodium: 30000 u,
glucose: 10 g,
sodium chloride: 8 g,
cefoxitin sodium: 3 g,
sodium bicarbonate: 1.5g,
10% compound amino acid injection: 60 mL,
12 vitamins for injection: 0.3 mL, and
balance of water.

In some embodiments, based on a total volume of 1000 mL, the perfusion fluid for isolated organ is composed of the following substances:
polymerized hemoglobin: 20 g,
thioredoxin peroxidase: 4 g,
heparin sodium: 20000 u,
glucose: 8 g,
sodium chloride: 6 g,
cefoxitin sodium: 1 g,
sodium bicarbonate: 1g,
10% compound amino acid injection: 40 mL,
12 vitamins for injection: 0.1 mL, and
balance of water.

In some embodiments, the thioredoxin peroxidase is thioredoxin peroxidase II.

In some embodiments, the cefoxitin sodium is cefoxitin sodium for injection.

In some embodiments, the 10% compound amino acid injection is 10% compound amino acid injection produced by Cisen Pharmaceutical Co., Ltd.

In some embodiments, the 12 vitamins for injection is "12 Vitamins for Injection" produced by Shanxi Pude Pharmaceutical Co., Ltd.

In some embodiments, the water is water for injection.

In some embodiments, the isolated organ is heart, liver, kidney or lung.

In some embodiments, the isolated organ is an isolated organ of a mammal.

In some embodiments, the mammal is human, dog, rat or pig.

In some embodiments, the polymerized hemoglobin is obtained by the following method:
collecting fresh blood, and diluting it with 6 g/L sodium citrate solution of 0.5 to 1 times the blood volume;
filtering the diluted blood with a 60 µm depth filter, and rinsing the residue on the 60 µm depth filter with 6 g/L sodium citrate solution until the hemoglobin passing through the filter reaches more than 95%;
placing the above material that passes through the 60µm depth filter on a 0.65µm hollow fiber membrane, and rinsing the material on the 0.65µm hollow fiber membrane with 6g/L sodium citrate solution of 5 to 8 times the initial blood volume so that a material smaller than 0.65µm passes through the 0.65µm hollow fiber membrane;
adding water for injection at a ratio of 1:1~2 according to the initial blood volume to the material retained by the 0.65µm hollow fiber membrane to lyse red blood cells, ultrafiltering the lysed red blood cells with a 100KD filter membrane to obtain the desired hemoglobin at the permeation end, and adding water for injection according to the permeation rate to maintain a constant ultrafiltration volume until the yield of hemoglobin is ≥95%, and terminating the 100KD ultrafiltration;
concentrating the above hemoglobin purified by the 100KD filter membrane with a 30KD membrane package to reach a hemoglobin concentration of 10 to 14 g/dl;
purifying the above purified hemoglobin in the concentration of 10 to 14g/dl by anion chromatography (balancing the column with 20mM tris solution → finishing the loading of sample in 40min → washing away impurities with 29mM tris solution of 3 times the volume of the purified hemoglobin in the concentration of 10 to 14g/dl → eluting with 50mM tris solution of 4 to 5 times the volume of the purified hemoglobin in the concentration of 10 to 14g/dl) to obtain a pure hemoglobin;
placing the pure hemoglobin obtained above on a 30KD filter membrane, and exchanging liquid with a 50 mM disodium hydrogen phosphate buffer of 3 times the volume of the pure hemoglobin;
then introducing an inert gas to perform deoxygenation until the oxyhemoglobin content is less than 5%, adding glutaraldehyde at a ratio of 35 to 45 mg of glutaraldehyde per 1g of hemoglobin by an atomization method (see the existing patent: CN201910846580.9), and then adding sodium borohydride at a ratio of 13 to 18 mg of sodium borohydride per 1g of hemoglobin to terminate the polymerization reaction;
subsequently concentrating the obtained polymerized hemoglobin to 6 to 7 g/dL, placing the polymerized hemoglobin that has been concentrated to 6 to 7g/dL on a 30KD ultrafiltration membrane package, exchanging liquid with a Lactated Ringer's solution (sodium chloride 6.73g/L, potassium chloride 0.3g/L, calcium chloride dihydrate 0.2g/L, 40% sodium lactate 3.07g/L, N-acetyl-L-cysteine 22g/L) of 5 to 8 times the volume of the 6 to 7g/dL polymerized hemoglobin to obtain polymerized hemoglobin, introducing an inert gas for deoxygenation until the oxyhemoglobin content is ≤5%, sterilizing with 0.2µm filter to obtain the polymerized hemoglobin.

In the above-mentioned embodiment, 160 to 200 U of insulin, such as the insulin produced by Wanbang Jinqiao Pharmaceutical Company, preferably 180 U of insulin, such as the insulin produced by Wanbang Jinqiao Pharmaceutical Company, can be added to the perfusion fluid for isolated organ.

In the second aspect of the present invention, the present invention provides a method for preserving an isolated organ for transplantation, the organ being an organ isolated from a circulatory system, which comprises: perfusing the isolated organ for transplantation with the aforementioned perfusion fluid for isolated organ.

In some embodiments, the method further comprises: immersing the isolated organ for transplantation after the perfusion in the aforementioned perfusion fluid for isolated organ.

In some embodiments, the perfusion and/or the immersion is performed at a temperature of 2 to 40 °C (e.g., 2°C, 4°C, 10°C, 15°C, 20°C, 25°C, 30°C, 35°C, 37°C or 40°C).

In some embodiments, the perfusion and/or the immersion is performed at a temperature of 10 to 30 °C (e.g., 10°C, 15°C, 16°C, 17°C, 18°C, 19°C, 20°C, 25°C or 30°C).

In some embodiments, the perfusion and/or the immersion is performed at a temperature of 16 to 20 °C (e.g., 18°C).

In some embodiments, the isolated organ is heart, liver, kidney or lung.

In some embodiments, the isolated organ is an isolated organ of a mammal.

In some embodiments, the mammal is human, dog, rat or pig.

In the third aspect of the present invention, the present invention provides use of the aforementioned perfusion fluid for isolated organ in the manufacture of a medicament for preserving an isolated organ for transplantation, the organ being an organ isolated from a circulatory system;
alternatively, the medicament is used for alleviating or repairing dysfunction of the isolated organ for transplantation.

In some embodiments, the preservation, the alleviation or the repair is performed at 2 to 40°C (e.g., 2°C, 4°C, 10°C, 15°C, 20°C, 25°C, 30°C, 35°C, 37°C or 40°C).

In some embodiments, the preservation, the alleviation or the repair is performed at 4 to 37°C (e.g., 4°C, 10°C, 15°C, 20°C, 25°C, 30°C, 35°C, 37°C).

In some embodiments, the preservation, the alleviation or the repair is performed at 10 to 30°C (e.g., 10°C, 15°C, 16°C, 17°C, 18°C, 19°C, 20°C, 25°C, or 30°C).

In some embodiments, the preservation, the alleviation, or the repair is performed at 16 to 20°C (e.g., 18°C).

In some embodiments, the isolated organ is heart, liver, kidney, or lung.

In some embodiments, the isolated organ is an isolated organ of a mammal.

In some embodiments, the mammal is human, dog, rat, or pig.

In the fourth aspect of the present invention, the present invention provides a composition, comprising:
polymerized hemoglobin; and thioredoxin peroxidase.

In some embodiments, based on a total volume of 1000 mL, the composition comprises:
polymerized hemoglobin: 20 to 40 g, such as 25g, 30g or 35g;
thioredoxin peroxidase: 4 to 10 g, such as 6g, 6.7g or 8g.

In some embodiments, the weight ratio of the polymerized hemoglobin to the thioredoxin peroxidase is 4:1 to 5:1, such as 4.3:1, 4.5:1 or 4.7:1.

In some embodiments, the composition further comprises:
heparin sodium;
glucose;
sodium chloride;
cefoxitin sodium;
sodium bicarbonate;
10% compound amino acid injection; and
12 vitamins for injection.

In some embodiments, based on a total volume of 1000 mL, the composition further comprises:
heparin sodium: 20000 to 30000 u, such as 23000u, 25000u or 27000u;
glucose: 8 to 10 g, such as 8.5g, 9g or 9.5g;
sodium chloride: 6 to 8 g, such as 6.5g, 7g or 7.5g;
cefoxitin sodium: 1 to 3 g, such as 1.5g, 2g or 2.5g;
sodium bicarbonate: 1 to 1.5g, such as 1.0g, 1.25g or 1.5g;
10% compound amino acid injection: 40 to 60 mL, such as 45mL, 50mL or 55mL;
12 vitamins for injection: 0.1 to 0.3 mL, such as 0.15mL, 0.2mL or 0.25mL.

In some embodiments, based on per 1 g of thioredoxin peroxidase, the composition comprises:
polymerized hemoglobin: 4 to 5g, such as 4.3g, 4.5g or 4.7g;
thioredoxin peroxidase: 1 g;
heparin sodium: 3000 to 5000 u, such as 3500u, 3700u, 4000u, 4500u or 4700u;
glucose: 1 to 2 g, such as 1.3g, 1.5g or 1.7g;
sodium chloride: 0.8 to 1.5g, such as 1.0g, 1.2g or 1.4g;
cefoxitin sodium: 0.25 to 0.3g, such as 0.26g, 0.27g, 0.28g or 0.29g;
sodium bicarbonate: 0.15 to 0.25g, such as 0.17g, 0.18g, 0.19g, 0.20g, 0.21g, 0.22g or 0.23g;
10% compound amino acid injection: 6-10 mL, such as 7.5mL, 8mL, 8.5mL, 9mL or 9.5mL;
12 vitamins for injection: 0.025 to 0.03 mL, such as 0.026mL, 0.027mL, 0.028mL or 0.029mL.

In the above-mentioned embodiment, 160 to 200 U of insulin, such as the insulin produced by Wanbang Jinqiao Pharmaceutical Company, preferably, 180 U of insulin, such as the insulin produced by Wanbang Jinqiao Pharmaceutical Company, can also be added to the composition.

In some embodiments, based on a total volume of 1000 mL, the composition is composed of the following substances:
polymerized hemoglobin: 20 to 40 g;
thioredoxin peroxidase: 4 to 10 g;
heparin sodium: 20000 to 30000 u;
glucose: 8 to 10 g;
sodium chloride: 6 to 8 g;
cefoxitin sodium: 1 to 3 g;
sodium bicarbonate: 1 to 1.5 g;
10% compound amino acid injection: 40 to 60 mL;
12 vitamins for injection: 0.1 to 0.3 mL; and
balance of water.

In some embodiments, based on a total volume of 1000 mL, the composition is composed of the following substances:
polymerized hemoglobin: 30 g,
thioredoxin peroxidase: 6.7 g,
heparin sodium: 25000 u,
glucose: 9 g,
sodium chloride: 7 g,
cefoxitin sodium: 2 g,
sodium bicarbonate: 1.25g,
10% compound amino acid injection: 50 mL,
12 vitamins for injection: 0.2 mL, and
balance of water.

In some embodiments, based on a total volume of 1000 mL, the composition is composed of the following substances:
polymerized hemoglobin: 40 g,
thioredoxin peroxidase: 10 g,
heparin sodium: 30000 u,
glucose: 10 g,
sodium chloride: 8 g,
cefoxitin sodium: 3 g,
sodium bicarbonate: 1.5g,
10% compound amino acid injection: 60 mL,
12 vitamins for injection: 0.3 mL, and
balance of water.

In some embodiments, based on a total volume of 1000 mL, the composition is composed of the following substances:
polymerized hemoglobin: 20 g,
thioredoxin peroxidase: 4 g,
heparin sodium: 20000 u,
glucose: 8 g,
sodium chloride: 6 g,
cefoxitin sodium: 1 g,
sodium bicarbonate: 1g,
10% compound amino acid injection: 40 mL,
12 vitamins for injection: 0.1 mL, and
balance of water.

In some embodiments, the thioredoxin peroxidase is thioredoxin peroxidase II.

In some embodiments, the cefoxitin sodium is cefoxitin sodium for injection.

In some embodiments, the water is water for injection.

In some embodiments, the 10% compound amino acid injection is 10% compound amino acid injection produced by Cisen Pharmaceutical Co., Ltd.

In some embodiments, the 12 vitamins for injection is "12 Vitamins for Injection" produced by Shanxi Pude Pharmaceutical Co., Ltd.

In some embodiments, the polymerized hemoglobin is obtained by the following method:
filtering blood with a 60µm depth filter to obtain red blood cells; washing the red blood cells by use of a 0.65µm hollow fiber membrane; lysing the washed red blood cells with a hypotonic solution to obtain a lysate; allowing the lysate to undergo 100KD ultrafiltration to obtain a crude pure hemoglobin; purifying the crude pure hemoglobin with an anion exchange chromatography to obtain a pure hemoglobin; allowing the pure hemoglobin to undergo polymerization reaction with glutaraldehyde by an atomization method; terminating the polymerization reaction with sodium borohydride, and performing 30KD ultrafiltration to exchange liquid to obtain the polymerized hemoglobin.

In some embodiments, the polymerized hemoglobin is obtained by a method as follows:
collecting fresh blood, and diluting it with 6 g/L sodium citrate solution of 0.5 to 1 times the blood volume;
filtering the diluted blood with a 60 µm depth filter, and rinsing the residue on the 60 µm depth filter with 6 g/L sodium citrate solution until the hemoglobin passing through the filter reaches more than 95%;
placing the above material that passes through the 60µm depth filter on a 0.65µm hollow fiber membrane, and rinsing the material on the 0.65µm hollow fiber membrane with 6g/L sodium citrate solution of 5 to 8 times the initial blood volume so that a material smaller than 0.65µm passes through the 0.65µm hollow fiber membrane;
adding water for injection at a ratio of 1:1~2 according to the initial blood volume to the material retained by the 0.65µm hollow fiber membrane to lyse red blood cells, ultrafiltering the lysed red blood cells with a 100KD filter membrane to obtain the desired hemoglobin at the permeation end, and adding water for injection according to the permeation rate to maintain a constant ultrafiltration volume until the yield of hemoglobin is ≥95%, and terminating the 100KD ultrafiltration;
concentrating the above hemoglobin purified by the 100KD filter membrane with a 30KD membrane package to reach a hemoglobin concentration of 10 to 14 g/dl;
purifying the above purified hemoglobin in the concentration of 10 to 14g/dl by anion chromatography (balancing the column with 20mM tris solution → finishing the loading of sample in 40min → washing away impurities with 29mM tris solution of 3 times the volume of the purified hemoglobin in the concentration of 10 to 14g/dl → eluting with 50mM tris solution of 4 to 5 times the volume of the purified hemoglobin in the concentration of 10 to 14g/dl) to obtain a pure hemoglobin;
placing the pure hemoglobin obtained above on a 30KD filter membrane, and exchanging liquid with a 50 mM disodium hydrogen phosphate buffer of 3 times the volume of the pure hemoglobin;
then introducing an inert gas to perform deoxygenation until the oxyhemoglobin content is less than 5%, adding glutaraldehyde at a ratio of 35 to 45 mg of glutaraldehyde per 1g of hemoglobin by an atomization method (see the existing patent: CN201910846580.9), and then adding sodium borohydride at a ratio of 13 to 18 mg of sodium borohydride per 1g of hemoglobin to terminate the polymerization reaction;
subsequently concentrating the obtained polymerized hemoglobin to 6 to 7 g/dL, placing the polymerized hemoglobin that has been concentrated to 6 to 7g/dL on a 30KD ultrafiltration membrane package, exchanging liquid with a Lactated Ringer's solution (sodium chloride 6.73g/L, potassium chloride 0.3g/L, calcium chloride dihydrate 0.2g/L, 40% sodium lactate 3.07g/L, N-acetyl-L-cysteine 22g/L) of 5 to 8 times the volume of the 6 to 7g/dL polymerized hemoglobin to obtain polymerized hemoglobin, introducing an inert gas for deoxygenation until the oxyhemoglobin content is ≤5%, sterilizing with 0.2µm filter to obtain the polymerized hemoglobin.

In the above-mentioned embodiment, 160 to 200 U of insulin, such as the insulin produced by Wanbang Jinqiao Pharmaceutical Company, preferably, 180 U of insulin, such as the insulin produced by Wanbang Jinqiao Pharmaceutical Company, can also be added to the composition.

It should be noted that the composition of the present invention can be used as a perfusion fluid or preservation solution. As a perfusion fluid, it is perfused into a vasculature of an organ to protect the tissues and cells of the organ. As a preservation solution, it is used as a bath for immersing an organ in it. Preferably, the composition of the present invention is used to perfuse an organ and the organ is immersed in it. In addition, when a blood flow or oxygen supply to an organ is restored after ischemia or hypoxia, the composition of the present invention can also be used as a reperfusion fluid to protect the ischemic or hypoxic organ from further damage.

To this end, in the fifth aspect of the present invention, the present invention provides an isolated organ preservation solution, perfusion fluid and/or reperfusion fluid, which comprises the aforementioned composition.

In some embodiments, the isolated organ is heart, liver, kidney, or lung.

In some embodiments, the isolated organ is an isolated organ of a mammal.

In some embodiments, the mammal is human, dog, rat, or pig.

In the sixth aspect of the present invention, the present invention provides a method for preserving an isolated organ for transplantation, the organ being an organ isolated from a circulatory system, which comprises: perfusing the organ with the aforementioned composition.

In some embodiments, the method further comprises: immersing the organ after perfusion in the aforementioned composition.

In some embodiments, the perfusion and/or the immersion is performed at a temperature of 2 to 40°C (e.g., 2°C, 4°C, 10°C, 15°C, 20°C, 25°C, 30°C, 35°C, 37°C or 40°C).

In some embodiments, the perfusion and/or the immersion is performed at a temperature of 4 to 37°C (e.g., 4°C, 10°C, 15°C, 20°C, 25°C, 30°C, 35°C, 37°C).

In some embodiments, the perfusion and/or the immersion is performed at a temperature of 10 to 30°C (e.g., 10°C, 15°C, 16°C, 17°C, 18°C, 19°C, 20°C, 25°C or 30°C).

In some embodiments, the perfusion and/or the immersion is performed at a temperature of 16 to 20°C (e.g., 18°C).

In some embodiments, the isolated organ is heart, liver, kidney, or lung.

In some embodiments, the isolated organ is an isolated organ of a mammal.

In some embodiments, the mammal is human, dog, rat, or pig.

In the seventh aspect of the present invention, the present invention provides use of the aforementioned composition in the manufacture of a medicament for preserving an isolated organ for transplantation, the organ being an organ isolated from a circulatory system.

In some embodiments, the preservation is performed at 2 to 40°C (e.g., 2°C, 4°C, 10°C, 15°C, 20°C, 25°C, 30°C, 35°C, 37°C, or 40°C).

In some embodiments, the preservation is performed at 4 to 37°C (e.g., 4°C, 10°C, 15°C, 20°C, 25°C, 30°C, 35°C, 37°C).

In some embodiments, the preservation is performed at 10 to 30°C (e.g., 10°C, 15°C, 16°C, 17°C, 18°C, 19°C, 20°C, 25°C, or 30°C).

In some embodiments, the preservation is performed at 16 to 20°C (e.g., 18°C).

In some embodiments, the isolated organ is heart, liver, kidney, or lung.

In some embodiments, the isolated organ is an isolated organ of a mammal.

In some embodiments, the mammal is human, dog, rat, or pig.

In the eighth aspect of the present invention, the present invention provides a method for protecting an ischemic and/or hypoxic isolated organ for transplantation from further damage, which comprises: perfusing the ischemic and/or hypoxic isolated organ with the aforementioned composition.

In some embodiments, the method further comprises: immersing the ischemic and/or hypoxic isolated organ after the perfusion in the aforementioned composition.

In some embodiments, the perfusion and/or the immersion is performed at a temperature of 2 to 40°C (e.g., 2°C, 4°C, 10°C, 15°C, 20°C, 25°C, 30°C, 35°C, 37°C or 40°C).

In some embodiments, the perfusion and/or the immersion is performed at a temperature of 4 to 37°C (e.g., 4°C, 10°C, 15°C, 20°C, 25°C, 30°C, 35°C, 37°C).

In some embodiments, the perfusion and/or the immersion is performed at a temperature of 10 to 30°C (e.g., 10°C, 15°C, 16°C, 17°C, 18°C, 19°C, 20°C, 25°C or 30°C).

In some embodiments, the perfusion and/or the immersion is performed at a temperature of 16 to 20°C (e.g., 18°C).

In some embodiments, the isolated organ is heart, liver, kidney, or lung.

In some embodiments, the isolated organ is an isolated organ of a mammal.

In some embodiments, the mammal is human, dog, rat, or pig.

In the ninth aspect of the present invention, the present invention provides use of the aforementioned composition in the manufacture of a medicament for protecting an ischemic and/or hypoxic isolated organ for transplantation from further damage.

In some embodiments, the protection is performed at a temperature of 2 to 40°C (e.g., 2°C, 4°C, 10°C, 15°C, 20°C, 25°C, 30°C, 35°C, 37°C, or 40°C).

In some embodiments, the protection is performed at a temperature of 4 to 37°C (e.g., 4°C, 10°C, 15°C, 20°C, 25°C, 30°C, 35°C, 37°C).

In some embodiments, the protection is performed at a temperature of 10 to 30°C (e.g., 10°C, 15°C, 16°C, 17°C, 18°C, 19°C, 20°C, 25°C, or 30°C).

In some embodiments, the protection is performed at 16 to 20°C (e.g., 18°C).

In some embodiments, the isolated organ is heart, liver, kidney, or lung.

In some embodiments, the isolated organ is an isolated organ of a mammal.

In some embodiments, the mammal is human, dog, rat, or pig.

In the tenth aspect of the present invention, the present invention provides a method for alleviating or repairing dysfunction of an (ischemic and/or hypoxic) isolated organ for transplantation, which comprises: perfusing the (ischemic and/or hypoxic) isolated organ with the aforementioned composition.

In some embodiments, the method further comprises: immersing the (ischemic and/or hypoxic) isolated organ after the perfusion in the aforementioned composition.

In some embodiments, the perfusion and/or the immersion is performed at a temperature of 2 to 40°C (e.g., 2°C, 4°C, 10°C, 15°C, 20°C, 25°C, 30°C, 35°C, 37°C or 40°C).

In some embodiments, the perfusion and/or the immersion is performed at a temperature of 4 to 37°C (e.g., 4°C, 10°C, 15°C, 20°C, 25°C, 30°C, 35°C, 37°C).

In some embodiments, the perfusion and/or the immersion is performed at a temperature of 10 to 30°C (e.g., 10°C, 15°C, 16°C, 17°C, 18°C, 19°C, 20°C, 25°C or 30°C).

In some embodiments, the perfusion and/or the immersion is performed at a temperature of 16 to 20°C (e.g., 18°C).

In some embodiments, the isolated organ is heart, liver, kidney, or lung.

In some embodiments, the isolated organ is an isolated organ of a mammal.

In some embodiments, the mammal is human, dog, rat, or pig.

In the eleventh aspect of the present invention, the present invention provides use of the aforementioned composition in the manufacture of a medicament for alleviating or repairing dysfunction of an (ischemic and/or hypoxic) isolated organ for transplantation.

In some embodiments, the alleviation or the repair is performed at a temperature of 2 to 40°C (e.g., 2°C, 4°C, 10°C, 15°C, 20°C, 25°C, 30°C, 35°C, 37°C or 40°C).

In some embodiments, the alleviation or the repair is performed at a temperature of 4 to 37°C (e.g., 4°C, 10°C, 15°C, 20°C, 25°C, 30°C, 35°C, 37°C).

In some embodiments, the alleviation or the repair is performed at a temperature of 10 to 30°C (e.g., 10°C, 15°C, 16°C, 17°C, 18°C, 19°C, 20°C, 25°C, or 30°C).

In some embodiments, the alleviation or the repair is performed at 16 to 20°C (e.g., 18°C).

In some embodiments, the isolated organ is heart, liver, kidney, or lung.

In some embodiments, the isolated organ is an isolated organ of a mammal.

In some embodiments, the mammal is human, dog, rat, or pig.

In the twelfth aspect of the present invention, the present invention provides a medicament, which comprises the aforementioned composition, the medicament is used at least for preserving an isolated organ for transplantation that is isolated from a circulatory system, protecting an ischemia and/or hypoxic isolated organ for transplantation from further damage, or alleviating or repairing dysfunction of an (ischemic and/or hypoxic) isolated organ for transplantation.

In the present invention, "normothermic" refers to 2 to 40°C, preferably 4 to 37°C, further preferably 10 to 30°C, and more preferably 16 to 20°C (e.g., 18°C).

### Beneficial effects

1. The added thioredoxin peroxidase II and polymerized hemoglobin combine with each other to exert synergistic effects in the perfusion fluid, thereby reducing the degradation rate of polymerized hemoglobin and making the polymerized hemoglobin perform the oxygen-carrying function for a longer time. In addition, the synergistic combination between thioredoxin peroxidase II and polymerized hemoglobin in the perfusion fluid can also play an important role in regulating the production and elimination of nitric oxide in the tissue, and these characteristics effectively neutralize the side effects of polymerized hemoglobin in this aspect, and the organ activity indicators such as NO and ET-1 can be maintained within the normal range for a longer time.
2. In the present invention, the combined use of thioredoxin peroxidase II and polymerized hemoglobin greatly prolongs the preservation time of organs in vitro, provides sufficient time for solving the problems such as mismatch time between the donor and the recipient and the transplantation in different places, reduces the waste of organs caused by the short preservation time, and improves the utilization rate of organs for transplantation.
3. The normothermic oxygen-carrying perfusion fluid provided by the present invention solves the problem that organs preserved under hypoxic conditions will suffer significant secondary damage during transplantation and reperfusion.
4. With the year-by-year increase in organ transplantation and the unforeseen demand for long-term organ preservation, the present invention has important clinical application value and deserves popularization.

### Specific Models for Carrying Out the Invention

The examples of the present invention will be described in detail below. The examples described below are exemplary and are intended to explain the present invention, but should not be construed as limiting the present invention.

The object of the present invention is to provide a normothermic mechanical organ perfusion fluid that can not only meet the requirements for perfusion and preservation of isolated organs at room temperature, but also can significantly prolong the safe preservation time of organs.

Another object of the present invention is to provide a method for preparing the aforementioned normothermic mechanical organ perfusion fluid.

Another object of the present invention is to provide a method for preparing the self-made hemoglobin in the aforementioned normothermic organ perfusion fluid.

The object of the present invention is achieved as follows: an organ perfusion fluid, which is mainly composed of 20 to 40 g of polymerized hemoglobin, 4 to 10 g of thioredoxin peroxidase II, 20000 to 30000 u of heparin sodium, 8 to 10 g of glucose, 6 to 8 g of sodium chloride, 1 to 3 g of cefoxitin sodium for injection, 1.0 to 1.5g of sodium bicarbonate, 40 to 60ml of 10% compound amino acid injection, 0.1 to 0.3ml of 12 vitamins for injection, and water for injection that is added to reach 1000 mL, into which an inert gas is introduced for deoxygenation until the oxyhemoglobin content is less than 5%, and it is stored under sealed and oxygen isolation conditions.

The preferred contents of the above components are: 30 g of polymerized hemoglobin, 6.7 g of thioredoxin peroxidase II, 25000 u of heparin sodium, 9 g of glucose, 7 g of sodium chloride, 2 g of cefoxitin sodium for injection, 1.25 g of sodium bicarbonate, 50 ml of 10% compound amino acid injection, 0.2 ml of 12 vitamins for injection, and water for injection that is added to reach 1000 mL.

Another object of the present invention is achieved as follows: the aforementioned normothermic mechanical organ perfusion fluid is prepared by a method, in which under aseptic conditions, the polymerized hemoglobin, thioredoxin peroxidase II, heparin sodium, glucose, sodium chloride, and cefoxitin sodium for injection are added with water for injection to reach 1000mL, mixed well, deoxygenated, sealed and stored in an oxygen isolation plastic bag.

Further another object of the present invention is achieved as follows: a self-made hemoglobin is prepared by a method, in which: blood is subjected to 60µm depth filtration, red blood cells are washed by use of 0.65µm hollow fiber membrane, a hypotonic solution is added to lyse the red blood cells, 100KD ultrafiltration is performed to obtain a crude pure hemoglobin, it is loaded on anion exchange chromatography to obtain a pure hemoglobin, glutaraldehyde is used to cross-link hemoglobin, the polymerization reaction is terminated with sodium borohydride, and 30KD ultrafiltration is performed to exchange liquid to obtain the self-made polymerized hemoglobin, in which the required indexes are: MW≤32,000 (free hemoglobin) ≤5%, methemoglobin <5%, oxyhemoglobin <5%.

After the product of the present invention is prepared, it should be used immediately; after sterilization, the product of the present invention has stable performance and can be stored for 1 to 2 years. The pH of the product of the present invention is 7.0 to 8.0.

The product of the present invention can be used for the normothermic organ perfusion and preservation of the isolated organs, and can effectively guarantee the biological activity of the organ within the safe preservation period. According to the difference in individuals and organs, its usage amount is 100 to 1000 mL each time.

Its specific application method is as follows:
Liver: the obtained liver is trimmed, in which the excess tissue in the hepatic hilar region is trimmed, the hepatic hilar lymph nodes are removed, the perfusion of portal vein adopts a constant flow mode with a flow rate of 0.5 mL/min/g (liver weight), and the perfusion of hepatic artery adopts a pressure control mode with a pressure of 80/60 mmHg, and the normothermic perfusion is then started. Heart: the obtained heart is trimmed, and the isolated heart perfusion system is turned on after the examination, and the flow rate is about 15ml/min, in which the aorta is lifted with a microscopic instrument, a perfusion tube is inserted, placed above the aortic valve and coronary artery opening, fixed with a non-invasive vascular clamp, tied and fixed with a silk thread, and the normothermic perfusion is started after the vascular clamp is removed. Kidney: the obtained kidney is trimmed, and connected with a perfusion instrument, and perfusion is performed by setting the renal artery pressure at 50 to 70 mmHg.

The present invention will be further explained below in conjunction with specific examples.

### Example 1: Preparation of bovine blood polymerized hemoglobin

1L of fresh bovine blood (self-raising cattle) was collected, and diluted with 6g/L sodium citrate solution of 0.5 to 1 times the volume of blood;
the diluted blood was filtered with a 60 µm depth filter, and the residue on the 60 µm depth filter was rinsed with 6 g/L sodium citrate solution until the hemoglobin passing through the filter reached more than 95%;
the above material passing through the 60µm depth filter was placed on a 0.65µm hollow fiber membrane, and the material on the 0.65µm hollow fiber membrane was rinsed with 6g/L sodium citrate solution of 5 to 8 times the initial blood volume so that the material that was smaller than 0.65µm passed through the 0.65µm hollow fiber membrane;
the material retained by the 0.65µm hollow fiber membrane was added with water for injection at a ratio of 1:1 to 2 according to the initial blood volume to lyse the red blood cells, the lysed red blood cells were ultrafiltered with a 100KD filter membrane, the desired hemoglobin was obtained at the permeation end, and water for injection was added according to the permeation rate to maintain a constant ultrafiltration volume until the yield of hemoglobin was ≥95%, then 100KD ultrafiltration was stopped;
the above hemoglobin purified by the 100KD filter membrane was concentrated with a 30KD membrane package to reach a hemoglobin concentration of 10 to 14g/dl;
the above purified hemoglobin in the concentration of 10 to 14g/dl was further purified by anion chromatography (balancing the column with 20mM tris solution → loading the sample in 40min → washing away impurities with 29mM tris solution of 3 times the volume of the purified hemoglobin in the concentration of 10 to 14g/dl → eluting with 50mM tris solution of 4 to 5 times the volume of the purified hemoglobin in the concentration of 10 to 14g/dl) to obtain a pure hemoglobin;
the pure hemoglobin obtained above was placed on a 30KD filter membrane, and 50 mM disodium hydrogen phosphate buffer of 3 times the volume of the pure hemoglobin was used to exchange liquid;
an inert gas was then introduced to deoxygenate until the oxyhemoglobin content was less than 5%, glutaraldehyde was added by atomization method at a ratio of 35 to 45 mg of glutaraldehyde per 1g of hemoglobin (see the existing patent: CN201910846580.9), and then sodium borohydride at a ratio of 13 to 18 mg of sodium borohydride per 1g of hemoglobin was added to terminate the polymerization reaction;
the obtained polymerized hemoglobin was then concentrated to 6 to 7 g/dL, the polymerized hemoglobin concentrated to 6 to 7g/dL was placed on a 30KD ultrafiltration membrane package, and Lactated Ringer's solution (sodium chloride 6.73g/L, potassium chloride 0.3g/L, calcium chloride dihydrate 0.2g/L, 40% sodium lactate 3.07g/L, N-acetyl-L-cysteine 22g/L) of 5 to 8 times the volume of the 6 to 7g/dL polymerized hemoglobin was used to exchange liquid so as to obtain polymerized hemoglobin, into which an inert gas was introduced for deoxygenation until the oxyhemoglobin content was ≤5%, and 0.2µm filter sterilization was performed to obtain the polymerized hemoglobin.

Thermo HPLC (ULTMATE3000) was used to perform molecular weight distribution analysis, in which the used molecular sieve column was Agilent Advance BioSEC 2.7um, 7.8 × 300mm, the used mobile phase was: 750mM magnesium chloride, 50mM Tris, and 0.1mM EDTA, the above-mentioned cross-linked hemoglobin was loaded, 20µg of the cross-linked hemoglobin per injection, and the product with MW≤32,000 (free hemoglobin) ≤5% was qualified; ABL90FLEX blood gas analyzer was used and 60µg of the above-mentioned deoxygenated polymerized hemoglobin was loaded to perform blood gas value detection, and the product with methemoglobin of <5% and oxyhemoglobin of <5% was qualified.

### Example 2: Preparation of pig blood polymerized hemoglobin

1L of fresh pig blood (self-raising pig) was collected, and the subsequent preparation process was the same as in Example 1.

### Example 3: Preparation of organ perfusion fluid

Components in the following preparation proportions for per 1000ml of organ perfusion fluid were weighed:

| | |
|---|---|
| polymerized hemoglobin (prepared by the method in Example 1) | 30 g |
| glucose (α-D-glucose, Aladdin Bio-Chem Technology Co., LTD.) | 9g |
| thioredoxin peroxidase II (ProSpec company) | 6.7g |
| heparin sodium (Aladdin Bio-Chem Technology Co., LTD.) | 25000u |
| sodium chloride (Sinopharm Chemical Reagent Co.,Ltd.) | 7g |
| cefoxitin sodium for injection (Salubris Pharmaceuticals Co., Ltd.) | 2g |
| sodium bicarbonate (Sinopharm Chemical Reagent Co.,Ltd. ) | 1.25g |
| 10% compound amino acid for injection (Cisen Pharmaceutical Co., Ltd.) | 50ml |
| 12 vitamins for injection (Shanxi Pude Pharmaceutical Co., Ltd.) | 0.2ml |

Under aseptic conditions, glucose, thioredoxin peroxidase II, sodium chloride, heparin sodium, cefoxitin sodium for injection, sodium bicarbonate were added in sequence according to the above-mentioned amounts, added with water for injection to reach 200ml, stirred until dissolved, then 10% compound amino acid for injection, 12 vitamins for injection, and polymerized hemoglobin were added, and added with water for injection to constant volume of 1000ml, and nitrogen gas was introduced for deoxygenation until the oxyhemoglobin content was <5%, it was subjected to 0.2µm filter sterilization, filled into an oxygen isolation plastic bag under the sterile and anaerobic environment, and the plastic bag was sealed by thermoplastication to obtain the perfusion fluid of Example 3.

### Example 4: Preparation of organ perfusion fluid

Components in the following preparation proportions for per 1000ml of organ perfusion fluid were weighed:

| | |
|---|---|
| polymerized hemoglobin (prepared by the method in Example 2) | 40 g |
| glucose (α-D-glucose, Aladdin Bio-Chem Technology Co., LTD.) | 10g |
| thioredoxin peroxidase II (ProSpec company) | 10g |
| heparin sodium (Aladdin Bio-Chem Technology Co., LTD.) | 30000u |
| sodium chloride (Sinopharm Chemical Reagent Co.,Ltd.) | 8g |
| cefoxitin sodium for injection (Salubris Pharmaceuticals Co., Ltd.) | 3g |
| sodium bicarbonate (Sinopharm Chemical Reagent Co.,Ltd.) | 1.5g |
| 10% compound amino acid for injection (Cisen Pharmaceutical Co., Ltd.) | 60ml |
| 12 vitamins for injection (Shanxi Pude Pharmaceutical Co., Ltd.) | 0.3ml |

Under aseptic conditions, glucose, thioredoxin peroxidase II, sodium chloride, heparin sodium, cefoxitin sodium for injection, sodium bicarbonate were added in sequence according to the above-mentioned amounts, added with water for injection to reach 200ml, stirred until dissolved, then 10% compound amino acid for injection, 12 vitamins for injection, and polymerized hemoglobin were added, and added with water for injection to constant volume of 1000ml, and nitrogen gas was introduced for deoxygenation until the oxyhemoglobin content was <5%, it was subjected to 0.2µm filter sterilization, filled into an oxygen isolation plastic bag under the sterile and anaerobic environment, and the plastic bag was sealed by thermoplastication to obtain the perfusion fluid of Example 4.

### Example 5: Preparation of organ perfusion fluid

Components in the following preparation proportions for per 1000ml of organ perfusion fluid were weighed:

| | |
|---|---|
| polymerized hemoglobin (prepared by the method in Example 1) | 20 g |
| glucose (α-D-glucose, Aladdin Bio-Chem Technology Co., LTD.) | 8g |
| thioredoxin peroxidase II (from ProSpec company) | 4g |
| heparin sodium (Aladdin Bio-Chem Technology Co., LTD.) | 20000u |
| sodium chloride (Sinopharm Chemical Reagent Co.,Ltd.) | 6g |
| cefoxitin sodium for injection (Salubris Pharmaceuticals Co., Ltd.) | 1g |
| sodium bicarbonate (Sinopharm Chemical Reagent Co.,Ltd.) | 1.0g |
| 10% compound amino acid for injection (Cisen Pharmaceutical Co., Ltd.) | 40ml |
| 12 vitamins for injection (Shanxi Pude Pharmaceutical Co., Ltd.) | 0.1ml |

Under aseptic conditions, glucose, thioredoxin peroxidase II, sodium chloride, heparin sodium, cefoxitin sodium for injection, sodium bicarbonate were added in sequence according to the above-mentioned amounts, added with water for injection to reach 200ml, stirred until dissolved, then 10% compound amino acid for injection, 12 vitamins for injection, and polymerized hemoglobin were added, and added with water for injection to constant volume of 1000ml, and nitrogen gas was introduced for deoxygenation until the oxyhemoglobin content was <5%, it was subjected to 0.2µm filter sterilization, filled into an oxygen isolation plastic bag under the sterile and anaerobic environment, and the plastic bag was sealed by thermoplastication to obtain the perfusion fluid of Example 5.

### Example 6: Perfusion experiment of isolated pig liver under formulae in different concentration of the present invention

Experimental pigs (Bama miniature pigs, 10-12 months old, 20-28kg, purchased from Beijing Shichuangshiji Miniature Pig Breeding Base) were subjected to preoperative fasting for 12h, water deprivation for 6h, anesthetized, fixed on the operating table in a supine position, and incised along abdominal midline to enter the abdomen, the incision reached the sternal xiphoid process and came down to the symphysis pubis, the left and right deltoid ligaments below the diaphragm were released, the common bile duct and pancreatic branches were ligated; the dissociation and acquisition of liver was performed in the protection of the first hepatic hilum, the ligaments around the liver were detached and the thoracic aorta above the thoracic aorta ligation site was cut off, the superior and inferior hepatic vena cava were cut off, the liver was dissociated from the posterior abdominal wall using the severed thoracic aorta as traction, the liver was dissociated upward close to the spine and the peri-hepatic peritoneal tissue and diaphragm were cut off, the aorta was dissociated below the hepatic artery branch, and the abdominal aorta was severed 1 cm below the hepatic artery branch to obtain the liver, the liver was trimmed to trim the excess tissue in the hepatic hilar region, and the hepatic hilar lymph nodes were removed. By connecting the perfusion machine, the portal vein was perfused in constant flow mode, the flow was set to 0.5 mL/min/g (liver weight), the hepatic artery was perfused in pressure control mode, the pressure was 80/60 mmHg, and the perfusion was started at 18°C. The obtained livers were divided into four groups: the first group was administered with the Lactated Ringer's solution; the second group was administered with the formula of Example 3 of the present invention; the third group was administered with the formula of Example 4 of the present invention; and the fourth group was administered with the formula of Example 5 of the present invention.

For the perfusion organs in each group, perfusion fluids were collected every 20 minutes from 0h to 1h and every 1 hour from 1h to 72h, and the perfused tissues were collected at a safety time limit point, so as to observe the following indicators:
change levels of AST (aspartate aminotransferase), ALT (alanine aminotransferase), TBIL (total bilirubin), ET-1 (endothelin 1) and polymerized hemoglobin half-life (the time spent for the hemoglobin concentration in the perfusion fluid to decrease to half, a conventional term in the field) in the perfusion fluids;
change levels of NO (nitric oxide) in the tissues;
changes of the tissues observed under electron microscope.

The results showed that: the above-mentioned different perfusion fluids all had protective effect on the perfused livers. The perfusion fluids were taken at different perfusion time points for detection, the perfusion maintenance safety time limits were determined on the basis that the content of AST was not greater than 40 U/L, the content of ALT was not greater than 40 U/L, the content of TBIL was not greater than 20.5umol/L, and the content of ET-1 was not greater than 20ng/L, and the perfusion maintenance safety time limits for the perfused organs in the above groups were 40min, 30h, 32h, 28h, respectively. The half-lives of polymerized hemoglobin in the second, third, and fourth perfusion fluid groups were 30h, 34h and 27h in sequence. Then a small piece of tissue was cut at the safety time limit of each perfusion fluid group, weighed, cut into pieces, added with a small amount of quartz sands and cold normal saline to homogenize, the homogenate was centrifuged at 10000r/min below 4°C for 20min, the supernatant was taken to determine tissue NO content, the determination results were all not less than the lower limit standard of 1.80umol/L. At the same time, 0.8×0.8×0.2 cm³ tissue was taken at the safety time limit of each perfusion fluid group, pre-fixed with 2.5% glutaraldehyde (0.1M) phosphate buffer of pH 7.4 for 2 hours at 4°C, then put into phosphate buffer of pH 7.38 and rinsed 3 times for 1 hour in total, then dehydrated step-by-step with 50%, 70%, 80%, 90%, 95% acetone, 15 minutes each time, and finally embedded and subjected to polymerization in a 60°C incubator for 48 hours. Ultramicrotome was used to prepare ultrathin sections, double-electron staining was performed with uranyl acetate and lead citrate, and JEM-1200EX electron microscope was used to observe changes in cell morphology and then the changes in organ activity were determined. The electron microscopy results showed that within the safety time limit of each perfusion fluid, the liver lobules were clearly contoured, the hepatic sinusoid in the lobules was arranged radially and anastomosed into a net, there was extensive anastomosis between adjacent liver lobules, and the interlobular artery and the interlobular vein were seen in the portal area, and the terminal branch of the hepatic artery continuously merged into the hepatic sinusoid along the periphery of the liver lobules.

In summary, under normothermic mechanical perfusion, the safety time limits for maintaining the above indicators were 40min, 30h, 32h, and 28h in the first group, the second group, the third group, and the fourth group, respectively, which indicated that the perfusion fluids within the concentration range of the present invention all could effectively prolong the perfusion and preservation time of isolated livers.

### Example 7: Perfusion experiment of isolated rat heart under perfusion fluids in different concentration of the present invention

Rats (Wistar, 9-11 weeks, female 220-240g, male 300-350g, purchased from Beijing Experimental Animal Center) were anesthetized, placed and fixed on the animal table. The abdominal skin was cut, the abdomen was opened along the Hunter's line to the xiphoid process. The intestinal tract was taken and placed on one side, the inferior vena cava was exposed. The rats were injected with the heparinized normal saline through the inferior vena cava, fully heparinized after 1 min, and the abdominal vessels were cut to let blood. Thoracotomy was performed quickly, the thymus tissue was removed to fully expose the heart and large blood vessels. The distal end of the innominate artery of the aorta was dissociated and cut off, the remaining large blood vessels were cut off quickly, the heart was taken and simply trimmed. The isolated heart perfusion system was turned on with a flow rate of about 15ml/min. The aorta was lifted with a microscopic instrument, the perfusion tube was inserted and placed above the aortic valve and coronary artery opening, fixed with a non-invasive vascular clamp, tied and fixed with a silk thread, then the vascular clamp was removed, and perfusion was started at 18°C. The obtained hearts were divided into four groups: the first group was administered with Lactated Ringer's solution; the second group was administered with the formula of Example 3 of the present invention; the third group was administered with the formula of Example 4 of the present invention; and the fourth group was administered with the formula of Example 5 of the present invention.

For the perfused organs of each group, perfusion fluids were collected every 10 minutes from 0h to 1h and every 1 hour from 1h to 72h, and the perfused tissues were collected at a safety time limit point, so as to observe the following indicators:
change levels of CTN (troponin), CK-MB (creatine kinase isoenzyme), ANP (blood atrial natriuretic peptide) and polymerized hemoglobin half-life in the perfusion fluids;
change levels of NO in the tissues;
changes of the tissues observed with electron microscope.

The results showed that: the above-mentioned different perfusion fluids all had protective effect on the perfused hearts. The perfusion fluids were taken at different perfusion time points for detection, the perfusion maintenance safety time limits were determined on the basis that the content of CTN was not greater than 0.13ug/L, the content of CK-MB was not greater than 16U/L, the content of ANP was not greater than 54pmol/L, and the perfusion maintenance safety time limits for the perfused organs in the above groups were 50min, 32h, 34h, 30h, respectively. The half-lives of polymerized hemoglobin in the second, third, and fourth perfusion fluid groups were 32h, 35h and 28h in sequence. Then a small piece of tissue was cut at the safety time limit of each perfusion fluid group, weighed, cut into pieces, added with a small amount of quartz sands and cold normal saline to homogenize, the homogenate was centrifuged at 10000r/min below 4°C for 20min, the supernatant was taken to determine tissue NO content, the determination results were all not less than the lower limit standard of 2.30umol/L. At the same time, 0.8×0.8×0.2 cm³ tissue was taken at the safety time limit of each perfusion fluid group, pre-fixed with 2.5% glutaraldehyde (0.1M) phosphate buffer of pH 7.4 for 2 hours at 4°C, then put into phosphate buffer of pH 7.38 and rinsed 3 times for 1 hour in total, then dehydrated step-by-step with 50%, 70%, 80%, 90%, 95% acetone, 15 minutes each time, and finally embedded and subjected to polymerization in a 60°C incubator for 48 hours. Ultramicrotome was used to prepare ultrathin sections, double-electron staining was performed with uranyl acetate and lead citrate, and JEM-1200EX electron microscope was used to observe changes in cell morphology and then the changes in organ activity were determined. The electron microscopy results showed that within the safety time limit of each perfusion fluid, the myocardial matrix network showed a dense honeycomb shape, the muscle cells were located in the muscle cell sheath, and the muscle cell sheath showed a round or elliptical structure, the collagen fibers on the outer surface of the sheath were arranged in a mesh shape, the orientation of collagen fibers on the outer surface of the muscle cell sheath was inconsistent and showed a network structure, the diameters of collagen fibers varied and all showed a normal state.

In summary, under normothermic mechanical perfusion, the safety time limits for maintaining the above indicators were 50min, 32h, 34h, and 30h in the first group, the second group, the third group, and the fourth group, respectively, indicating that the perfusion fluids within the concentration range of the present invention all could effectively prolong the perfusion and preservation time of the isolated hearts.

### Example 8: Perfusion experiment of isolated dog kidney under perfusion fluids in different concentration of the present invention

Experimental dogs (adult Beagle, 7-10kg, purchased from Beijing Experimental Animal Center) were anesthetized, fixed in the middle in a supine position, the tissue was separated after laparotomy, the kidney was exposed and cut, and trimmed, the perfusion instrument was connected and the perfusion was performed at 18°C with a renal artery pressure of 55mmHg. The obtained kidneys were divided into four groups: the first group was administered with the Lactated Ringer's solution; the second group was administered with the formula of Example 3 of the present invention; the third group was administered with the formula of Example 4 of the present invention; and the fourth group was administered with the formula of Example 5 of the present invention.

For the perfused organs of each group, perfusion fluids were collected every 1 hour from 0h to 120h, and the perfused tissues were collected at a safety time limit point, so as to observe the following indicators:
change levels of Scr (creatinine), BUN (urea nitrogen), ET-1 (endothelin 1) and polymerized hemoglobin half-life in the perfusion fluids;
change levels of NO in the tissues;
changes of the tissues observed with electron microscope.

The results showed that: the above-mentioned different perfusion fluids all had protective effect on the perfused kidneys. The perfusion fluids were taken at different perfusion time points for detection, the perfusion maintenance safety time limits were determined on the basis that the content of Scr was not greater than 120µmol/L, the content of BUN was not greater than 7.0mmol/L, the content of ET-1 was not greater than 20ng/L, and the perfusion maintenance safety time limits for the perfused organs in the above groups were 2h, 108h, 113h, 102h, respectively. The half-lives of polymerized hemoglobin in the second, third, and fourth perfusion fluid groups were 78h, 86h and 72h in sequence. Then a small piece of tissue was cut at the safety time limit of each perfusion fluid group, weighed, cut into pieces, added with a small amount of quartz sands and cold normal saline to homogenize, the homogenate was centrifuged at 10000r/min below 4°C for 20min, the supernatant was taken to determine tissue NO content, the determination results were all not less than the lower limit standard of 3.40umol/L. At the same time, 0.8×0.8×0.2 cm³ tissue was taken at the safety time limit of each perfusion fluid group, pre-fixed with 2.5% glutaraldehyde (0.1M) phosphate buffer of pH 7.4 for 2 hours at 4°C, then put into phosphate buffer of pH 7.38 and rinsed 3 times for 1 hour in total, then dehydrated step-by-step with 50%, 70%, 80%, 90%, 95% acetone, 15 minutes each time, and finally embedded and subjected to polymerization in a 60°C incubator for 48 hours. Ultramicrotome was used to prepare ultrathin sections, double-electron staining was performed with uranyl acetate and lead citrate, and JEM-1200EX electron microscope was used to observe changes in cell morphology and then the changes in organ activity were determined. The electron microscopy results showed that within the safety time limit of each perfusion fluid, the karyotype was roughly normal, the nucleoplasm was evenly distributed, and the mitochondria was slightly swollen, but the cristae arrangement was still good, and individual cristae membrane spaces were slightly widened. There was also mild swelling of the endoplasmic reticulum. The microvilli of the epithelial cells of the proximal convoluted tubules were dropsical, thickened, and exfoliated individually. The capillary endothelium and filtration membrane endothelial cells were slightly dropsical, but the structure was still clear and showed normal state.

In summary, under normothermic mechanical perfusion, the safety time limits for maintaining the above indicators were 2h, 108h, 113h, and 102h in the first group, the second group, the third group, and the fourth group, respectively, indicating that the perfusion fluids within the concentration range of the present invention all could effectively prolong the perfusion and preservation time of isolated kidneys.

### Example 9: Perfusion experiment of discarded human liver under perfusion fluids in different concentration of the present invention

Discarded human livers were obtained from the hospital, the livers were trimmed to trim the excess tissues in the hepatic hilar region, and the hepatic hilar lymph nodes were removed. The perfusion instrument was connected, the portal vein was perfused in constant flow mode with a flow of 0.5 mL/min/g (liver weight), the hepatic artery was perfused in pressure control mode with a pressure of 80/60 mmHg, and the perfusion was started at 18°C. The obtained livers were divided into four groups: the first group was administered with Lactated Ringer's solution; the second group was administered with the formula of Example 3 of the present invention; the third group was administered with the formula of Example 4 of the present invention; and the fourth group was administered with the formula of Example 5 of the present invention.

For the perfused organs of each group, perfusion fluids were collected every 20 minutes from 0h to 1h and every 1 hour from 1h to 72h, and the perfused tissues were collected at a safety time limit point, so as to observe the following indicators:
change levels of AST, ALT, TBIL, ET-1 and polymerized hemoglobin half-life in the perfusion fluids;
change levels of NO in the tissues;
changes of the tissues observed with electron microscope.

The results showed that: the above-mentioned different perfusion fluids all had protective effect on the perfused livers. The perfusion fluids were taken at different perfusion time points for detection, the perfusion maintenance safety time limits were determined on the basis that the content of AST was not greater than 40 U/L, the content of ALT was not greater than 40 U/L, the content of TBIL was not greater than 20.5umol/L, and the content of ET-1 was not greater than 20ng/L, and the perfusion maintenance safety time limits for the perfused organs in the above groups were 40min, 30h, 32h, 28h, respectively. The half-lives of polymerized hemoglobin in the second, third, and fourth perfusion fluid groups were 30h, 34h and 27h in sequence. Then a small piece of tissue was cut at the safety time limit of each perfusion fluid group, weighed, cut into pieces, added with a small amount of quartz sands and cold normal saline to homogenize, the homogenate was centrifuged at 10000r/min below 4°C for 20min, the supernatant was taken to determine tissue NO content, the determination results were all not less than the lower limit standard of 1.80umol/L. At the same time, 0.8×0.8×0.2 cm³ tissue was taken at the safety time limit of each perfusion fluid group, pre-fixed with 2.5% glutaraldehyde (0.1M) phosphate buffer of pH 7.4 for 2 hours at 4°C, then put into phosphate buffer of pH 7.38 and rinsed 3 times for 1 hour in total, then dehydrated step-by-step with 50%, 70%, 80%, 90%, 95% acetone, 15 minutes each time, and finally embedded and subjected to polymerization in a 60°C incubator for 48 hours. Ultramicrotome was used to prepare ultrathin sections, double-electron staining was performed with uranyl acetate and lead citrate, and JEM-1200EX electron microscope was used to observe changes in cell morphology and then the changes in organ activity were determined. The electron microscopy results showed that within the safety time limit of each perfusion fluid, the liver lobules were clearly contoured, the hepatic sinusoid in the lobules was arranged radially and anastomosed into a net, there was extensive anastomosis between adjacent liver lobules, and the interlobular artery and the interlobular vein were seen in the portal area, and the terminal branch of the hepatic artery continuously merged into the hepatic sinusoid along the periphery of the liver lobules.

In summary, under normothermic mechanical perfusion, the safety time limits for maintaining the above indicators were 40min, 30h, 32h, and 28h in the first group, the second group, the third group, and the fourth group, respectively, which indicated that within the concentration range of the present invention, they all could effectively extend the perfusion and preservation time of isolated livers.

### Example 10: Perfusion experiment of isolated pig liver at different temperatures

Experimental pigs (Bama miniature pigs, 10-12 months old, 20-28kg, purchased from Beijing Shichuangshiji Miniature Pig Breeding Base) were subjected to preoperative fasting for 12h, water deprivation for 6h, anesthetized, fixed on the operating table in a supine position, and incised along abdominal midline to enter the abdomen, the incision reached the sternal xiphoid process and came down to the symphysis pubis, the left and right deltoid ligaments below the diaphragm were released, the common bile duct and pancreatic branches were ligated; the dissociation and acquisition of liver was performed in the protection of the first hepatic hilum, the ligaments around the liver were detached and the thoracic aorta above the thoracic aorta ligation site was cut off, the superior and inferior hepatic vena cava were cut off, the liver was dissociated from the posterior abdominal wall using the severed thoracic aorta as traction, the liver was dissociated upward close to the spine and the peri-hepatic peritoneal tissue and diaphragm were cut off, the aorta was dissociated below the hepatic artery branch, and the abdominal aorta was severed 1 cm below the hepatic artery branch to obtain the liver, the liver was trimmed to trim the excess tissue in the hepatic hilar region, and the hepatic hilar lymph nodes were removed. By connecting the perfusion machine, the portal vein was perfused in constant flow mode, the flow was set to 0.5 mL/min/g (liver weight), the hepatic artery was perfused in pressure control mode, the pressure was 80/60 mmHg, and the perfusion was started at different temperatures. The obtained livers were divided into three groups: the first group was administered with the formula of Example 3 of the present invention by perfusing at 4°C; the second group was administered with the formula of Example 3 of the present invention by perfusing at 18°C; and the third group was administered with the formula of Example 3 of the present invention by perfusing at 37°C.

For the perfusion organs in each group, perfusion fluids were collected every 20 minutes from 0h to 1h and every 1 hour from 1h to 72h, and the perfused tissues were collected at a safety time limit point, so as to observe the following indicators:
change levels of AST, ALT, TBIL, ET-1 and polymerized hemoglobin half-life in the perfusion fluids;
change levels of NO (nitric oxide) in the tissues;
changes of the tissues observed under electron microscope.

The results showed that: the above-mentioned different perfusion fluids all had protective effect on the perfused livers. The perfusion fluids were taken at different perfusion time points for detection, the perfusion maintenance safety time limits were determined on the basis that the content of AST was not greater than 40 U/L, the content of ALT was not greater than 40 U/L, the content of TBIL was not greater than 20.5umol/L, and the content of ET-1 was not greater than 20ng/L, and the perfusion maintenance safety time limits for the perfused organs in the above groups were 35h, 30h, 27h, respectively. The half-lives of polymerized hemoglobin in the above groups were 42h, 38h and 32h in sequence. Then a small piece of tissue was cut at the safety time limit of each perfusion fluid group, weighed, cut into pieces, added with a small amount of quartz sands and cold normal saline to homogenize, the homogenate was centrifuged at 10000r/min below 4°C for 20min, the supernatant was taken to determine tissue NO content, the determination results were all not less than the lower limit standard of 1.80umol/L. At the same time, 0.8×0.8×0.2 cm³ tissue was taken at the safety time limit of each perfusion fluid group, pre-fixed with 2.5% glutaraldehyde (0.1M) phosphate buffer of pH 7.4 for 2 hours at 4°C, then put into phosphate buffer of pH 7.38 and rinsed 3 times for 1 hour in total, then dehydrated step-by-step with 50%, 70%, 80%, 90%, 95% acetone, 15 minutes each time, and finally embedded and subjected to polymerization in a 60°C incubator for 48 hours. Ultramicrotome was used to prepare ultrathin sections, double-electron staining was performed with uranyl acetate and lead citrate, and JEM-1200EX electron microscope was used to observe changes in cell morphology and then the changes in organ activity were determined. The electron microscopy results showed that within the safety time limit of each perfusion fluid, the liver lobules were clearly contoured, the hepatic sinusoid in the lobules was arranged radially and anastomosed into a net, there was extensive anastomosis between adjacent liver lobules, and the interlobular artery and the interlobular vein were seen in the portal area, and the terminal branch of the hepatic artery continuously merged into the hepatic sinusoid along the periphery of the liver lobules.

In summary, under mechanical perfusion at different temperatures, the safety time limits for maintaining the above indicators were 35h, 30h, and 27h in the first group, second group, and third group, respectively, indicating that in the range of different perfusion temperatures, the perfusion fluids all could effectively prolong the perfusion and preservation time of the isolated livers.

### Example 11: Perfusion experiment of isolated rat heart at different temperatures

Rats (Wistar, 9-11 weeks, female 220-240g, male 300-350g, purchased from Beijing Experimental Animal Center) were anesthetized, placed and fixed on the animal table. The abdominal skin was cut, the abdomen was opened along the Hunter's line to the xiphoid process. The intestinal tract was taken and placed on one side, the inferior vena cava was exposed. The rats were injected with the heparinized normal saline through the inferior vena cava, fully heparinized after 1 min, and the abdominal vessels were cut to let blood. Thoracotomy was performed quickly, the thymus tissue was removed to fully expose the heart and large blood vessels. The distal end of the innominate artery of the aorta was dissociated and cut off, the remaining large blood vessels were cut off quickly, the heart was taken and simply trimmed. The isolated heart perfusion system was turned on with a flow rate of about 15ml/min. The aorta was lifted with a microscopic instrument, the perfusion tube was inserted and placed above the aortic valve and coronary artery opening, fixed with a non-invasive vascular clamp, tied and fixed with a silk thread, then the vascular clamp was removed, and normothermic perfusion was started. The obtained hearts were divided into three groups: the first group was administered with the formula of Example 3 of the present invention by perfusing at 4°C; the second group was administered with the formula of Example 3 of the present invention by perfusing at 18°C; and the third group was administered with the formula of Example 3 of the present invention by perfusing at 37°C.

For the perfused organs of each group, perfusion fluids were collected every 10 minutes from 0h to 1h and every 1 hour from 1h to 72h, and the perfused tissues were collected at a safety time limit point, so as to observe the following indicators:
change levels of CTN, CK-MB, ANP and polymerized hemoglobin half-life in the perfusion fluids;
change levels of NO in the tissues;
changes of the tissues observed with electron microscope.

The results showed that: the above-mentioned different perfusion fluids all had protective effect on the perfused hearts. The perfusion fluids were taken at different perfusion time points for detection, the perfusion maintenance safety time limits were determined on the basis that the content of CTN was not greater than 0.13ug/L, the content of CK-MB was not greater than 16U/L, the content of ANP was not greater than 54pmol/L, and the perfusion maintenance safety time limits for the perfused organs in the above groups were 37h, 32h, 28h, respectively. The half-lives of polymerized hemoglobin in the above groups were 46h, 42h and 35h in sequence. Then a small piece of tissue was cut at the safety time limit of each perfusion fluid group, weighed, cut into pieces, added with a small amount of quartz sands and cold normal saline to homogenize, the homogenate was centrifuged at 10000r/min below 4°C for 20min, the supernatant was taken to determine tissue NO content, the determination results were all not less than the lower limit standard of 2.30umol/L. At the same time, 0.8×0.8×0.2 cm³ tissue was taken at the safety time limit of each perfusion fluid group, pre-fixed with 2.5% glutaraldehyde (0.1M) phosphate buffer of pH 7.4 for 2 hours at 4°C, then put into phosphate buffer of pH 7.38 and rinsed 3 times for 1 hour in total, then dehydrated step-by-step with 50%, 70%, 80%, 90%, 95% acetone, 15 minutes each time, and finally embedded and subjected to polymerization in a 60°C incubator for 48 hours. Ultramicrotome was used to prepare ultrathin sections, double-electron staining was performed with uranyl acetate and lead citrate, and JEM-1200EX electron microscope was used to observe changes in cell morphology and then the changes in organ activity were determined. The electron microscopy results showed that within the safety time limit of each perfusion fluid, the myocardial matrix network showed a dense honeycomb shape, the muscle cells were located in the muscle cell sheath, and the muscle cell sheath showed a round or elliptical structure, the collagen fibers on the outer surface of the sheath were arranged in a mesh shape, the orientation of collagen fibers on the outer surface of the muscle cell sheath was inconsistent and showed a network structure, the diameters of collagen fibers varied and all showed a normal state.

In summary, under normothermic mechanical perfusion, the safety time limits for maintaining the above indicators were 37h, 32h, and 28h in the first group, the second group, the third group, and the fourth group, respectively, indicating that at the different temperatures of the present invention, the perfusion fluids all could effectively prolong the perfusion and preservation time of the isolated hearts.

### Comparative Example 1: Comparison of experimental results of isolated pig livers perfused with perfusion fluids of different formulas

Experimental pigs (Bama miniature pigs, 10-12 months old, 20-28kg, purchased from Beijing Shichuangshiji Miniature Pig Breeding Base) were subjected to preoperative fasting for 12h, water deprivation for 6h, anesthetized, fixed on the operating table in a supine position, and incised along abdominal midline to enter the abdomen, the incision reached the sternal xiphoid process and came down to the symphysis pubis, the left and right deltoid ligaments below the diaphragm were released, the common bile duct and pancreatic branches were ligated; the dissociation and acquisition of liver was performed in the protection of the first hepatic hilum, the ligaments around the liver were detached and the thoracic aorta above the thoracic aorta ligation site was cut off, the superior and inferior hepatic vena cava were cut off, the liver was dissociated from the posterior abdominal wall using the severed thoracic aorta as traction, the liver was dissociated upward close to the spine and the peri-hepatic peritoneal tissue and diaphragm were cut off, the aorta was dissociated below the hepatic artery branch, and the abdominal aorta was severed 1 cm below the hepatic artery branch to obtain the liver, the liver was trimmed to trim the excess tissue in the hepatic hilar region, and the hepatic hilar lymph nodes were removed. By connecting the perfusion machine, the portal vein was perfused in constant flow mode, the flow was set to 0.5 mL/min/g (liver weight), the hepatic artery was perfused in pressure control mode, the pressure was 80/60 mmHg, and the perfusion was started at 18°C. The obtained livers were divided into six groups: the first group was administered with the Lactated Ringer's solution; the second group was administered with a perfusion fluid in which the thioredoxin peroxidase II was removed from the formula of Example 3 of the present invention; the third group was administered with the formula of Example 3 of the present invention; the fourth group was administered with a perfusion fluid in which the thioredoxin peroxidase II in the formula of Example 3 of the present invention was replaced with thioredoxin (purchased from Sigma); the fifth group was administered with a perfusion fluid in which the thioredoxin peroxidase II in the formula of Example 3 of the present invention was replaced with superoxide dismutase (purchased from Sigma); and the sixth group was administered with a perfusion fluid in which the polymerized hemoglobin in the formula of Example 3 of the present invention was removed.

For the perfusion organs in each group, perfusion fluids were collected every 20 minutes from 0h to 1h and every 1 hour from 1h to 72h, and the perfused tissues were collected at a safety time limit point, so as to observe the following indicators:
change levels of AST, ALT, TBIL, ET-1 and polymerized hemoglobin half-life in the perfusion fluids;
change levels of NO (nitric oxide) in the tissues;
changes of the tissues observed under electron microscope.

The results showed that: the above-mentioned different perfusion fluids all had protective effect on the perfused livers. The perfusion fluids were taken at different perfusion time points for detection, the perfusion maintenance safety time limits were determined on the basis that the content of AST was not greater than 40 U/L, the content of ALT was not greater than 40 U/L, the content of TBIL was not greater than 20.5umol/L, and the content of ET-1 was not greater than 20ng/L, and the perfusion maintenance safety time limits for the perfused organs in the above groups were 40min, 18h, 30h, 18h, 18h, 40min, respectively. The half-lives of polymerized hemoglobin in the second, third, fourth and fifth perfusion fluid groups were 20h, 30h, 20h and 20h in sequence. Then a small piece of tissue was cut at the safety time limit of each perfusion fluid group, weighed, cut into pieces, added with a small amount of quartz sands and cold normal saline to homogenize, the homogenate was centrifuged at 10000r/min below 4°C for 20min, the supernatant was taken to determine tissue NO content, the determination results were all not less than the lower limit standard of 1.80umol/L. At the same time, 0.8×0.8×0.2 cm³ tissue was taken at the safety time limit of each perfusion fluid group, pre-fixed with 2.5% glutaraldehyde (0.1M) phosphate buffer of pH 7.4 for 2 hours at 4°C, then put into phosphate buffer of pH 7.38 and rinsed 3 times for 1 hour in total, then dehydrated step-by-step with 50%, 70%, 80%, 90%, 95% acetone, 15 minutes each time, and finally embedded and subjected to polymerization in a 60°C incubator for 48 hours. Ultramicrotome was used to prepare ultrathin sections, double-electron staining was performed with uranyl acetate and lead citrate, and JEM-1200EX electron microscope was used to observe changes in cell morphology and then the changes in organ activity were determined. The electron microscopy results showed that within the safety time limit of each perfusion fluid, the liver lobules were clearly contoured, the hepatic sinusoid in the lobules was arranged radially and anastomosed into a net, there was extensive anastomosis between adjacent liver lobules, and the interlobular artery and the interlobular vein were seen in the portal area, and the terminal branch of the hepatic artery continuously merged into the hepatic sinusoid along the periphery of the liver lobules.

### Result analysis:

Under normothermic mechanical perfusion, the polymerized hemoglobin half-lives of the second, third, fourth, and fifth groups were 20h, 30h, 20h, and 20h in sequence (as shown in Table 1 below). From the comparison of the half-life results of the second group using polymerized hemoglobin alone and the third group of the present invention, it could be seen that the combined use of polymerized hemoglobin and thioredoxin peroxidase II could significantly prolong the half-life of polymerized hemoglobin, significantly reduce the degradation rate of polymerized hemoglobin, and significantly enhance the stability of polymerized hemoglobin. The replacement of thioredoxin peroxidase II with thioredoxin (Abcam, China) in the fourth group could not prolong the half-life of polymerized hemoglobin, and the replacement of thioredoxin peroxidase II with superoxide dismutase (ProSpec) in the fifth group also could not prolong the half-life of polymerized hemoglobin, indicating that the synergistic effect of polymerized hemoglobin and thioredoxin peroxidase II in the organ perfusion fluid of the present invention was specific.

Under normothermic mechanical perfusion, the safety time limits for the maintenance of the above indicators were 40min, 18h, 30h, 18h, 18h, 40min in the first group, second group, third group, fourth group, fifth group, and sixth group (as shown in Table 1 below). It could be seen from the third group of the present invention that the combined use of polymerized hemoglobin and thioredoxin peroxidase II could significantly prolong the preservation time of the livers. The replacement of thioredoxin peroxidase II with thioredoxin (Abcam, China) in the fourth group could not prolong the preservation time of the liver, the replacement of thioredoxin peroxidase II with superoxide dismutase (ProSpec) in the fifth group also could not prolong the preservation time of the liver, and using thioredoxin peroxidase II or polymerized hemoglobin alone in the second and sixth groups could not effectively prolong the preservation time of the liver, indicating that the synergistic effect of polymerized hemoglobin and thioredoxin peroxidase II in the organ perfusion fluid of the present invention was specific.

**Table 1: Comparison of experimental results of isolated pig livers perfused with perfusion fluids of different formulas**

| Group | First group | Second group | Third group | Fourth group | Fifth group | Sixth group |
|---|---|---|---|---|---|---|
| Formula | Lactated Ringer's Solution | Formula of Example 3 in which thioredoxin peroxidase II was removed | Formula of Example 3 | Formula of Example 3 in which thioredoxin peroxidase II was replaced with thioredoxin | Formula of Example 3 in which thioredoxin peroxidase II was replaced with superoxide dismutase | Formula of Example 3 in which polymerized hemoglobin was removed |
| Half-life of polymerized hemoglobin | | 20h | 30h | 20h | 20h | |
| Safety time limit | 40min | 18h | 30h | 18h | 18h | 40min |

### Comparative Example 2: Comparison of experimental results of isolated rat hearts perfused with perfusion fluids of different formulas

Rats (Wistar, 9-11 weeks, female 220-240g, male 300-350g, purchased from Beijing Experimental Animal Center) were anesthetized, placed and fixed on the animal table. The abdominal skin was cut, the abdomen was opened along the Hunter's line to the xiphoid process. The intestinal tract was taken and placed on one side, the inferior vena cava was exposed. The rats were injected with the heparinized normal saline through the inferior vena cava, fully heparinized after 1 min, and the abdominal vessels were cut to let blood. Thoracotomy was performed quickly, the thymus tissue was removed to fully expose the heart and large blood vessels. The distal end of the innominate artery of the aorta was dissociated and cut off, the remaining large blood vessels were cut off quickly, the heart was taken and simply trimmed. The isolated heart perfusion system was turned on with a flow rate of about 15ml/min. The aorta was lifted with a microscopic instrument, the perfusion tube was inserted and placed above the aortic valve and coronary artery opening, fixed with a non-invasive vascular clamp, tied and fixed with a silk thread, then the vascular clamp was removed, and perfusion was started at 18°C. The obtained hearts were divided into six groups: the first group was administered with the Lactated Ringer's solution; the second group was administered with a perfusion fluid in which the thioredoxin peroxidase II in the formula of Example 3 of the present invention was removed; the third group was administered with the formula of Example 3 of the present invention; the fourth group was administered with a perfusion fluid in which the thioredoxin peroxidase II in the formula of Example 3 of the present invention was replaced with thioredoxin; the fifth group was administered with a perfusion fluid in which the thioredoxin peroxidase II in the formula of Example 3 of the present invention was replaced with superoxide dismutase; and the sixth group was administered with a perfusion fluid in which the polymerized hemoglobin in the formula of Example 3 of the present invention was removed.

For the perfused organs of each group, perfusion fluids were collected at eight main time points every 10 minutes from 0h to 1h and every 1 hour from 1h to 72h, and the perfused tissues were collected at a safety time limit point, so as to observe the following indicators:
change levels of CTN, CK-MB, ANP and polymerized hemoglobin half-life in the perfusion fluids;
change levels of NO in the tissues;
changes of the tissues observed with electron microscope.

The results showed that: the above-mentioned different perfusion fluids all had protective effect on the perfused hearts. The perfusion fluids were taken at different perfusion time points for detection, the perfusion maintenance safety time limits were determined on the basis that the content of CTN was not greater than 0.13ug/L, the content of CK-MB was not greater than 16U/L, the content of ANP was not greater than 54pmol/L, and the perfusion maintenance safety time limits for the perfused organs in the above groups were 50min, 20h, 32h, 20h, 20h, 50min, respectively. The half-lives of polymerized hemoglobin in the second, third, fourth and fifth perfusion fluid groups were 24h, 32h, 24h and 24h in sequence. Then a small piece of tissue was cut at the safety time limit of each perfusion fluid group, weighed, cut into pieces, added with a small amount of quartz sands and cold normal saline to homogenize, the homogenate was centrifuged at 10000r/min below 4°C for 20min, the supernatant was taken to determine tissue NO content, the determination results were all not less than the lower limit standard of 2.30umol/L. At the same time, 0.8×0.8×0.2 cm³ tissue was taken at the safety time limit of each perfusion fluid group, pre-fixed with 2.5% glutaraldehyde (0.1M) phosphate buffer of pH 7.4 for 2 hours at 4°C, then put into phosphate buffer of pH 7.38 and rinsed 3 times for 1 hour in total, then dehydrated step-by-step with 50%, 70%, 80%, 90%, 95% acetone, 15 minutes each time, and finally embedded and subjected to polymerization in a 60°C incubator for 48 hours. Ultramicrotome was used to prepare ultrathin sections, double-electron staining was performed with uranyl acetate and lead citrate, and JEM-1200EX electron microscope was used to observe changes in cell morphology and then the changes in organ activity were determined. The electron microscopy results showed that within the safety time limit of each perfusion fluid, the myocardial matrix network showed a dense honeycomb shape, the muscle cells were located in the muscle cell sheath, and the muscle cell sheath showed a round or elliptical structure, the collagen fibers on the outer surface of the sheath were arranged in a mesh shape, the orientation of collagen fibers on the outer surface of the muscle cell sheath was inconsistent and showed a network structure, the diameters of collagen fibers varied and all showed a normal state.

### Result analysis:

Under normothermic mechanical perfusion, the half-lives of polymerized hemoglobin in the second, third, fourth, and fifth groups were 24h, 32h, 24h, and 24h in sequence (as shown in Table 2 below). From the comparison of the half-life results of the second group using polymerized hemoglobin alone and the third group of the present invention, it could be seen that the combined use of polymerized hemoglobin and thioredoxin peroxidase II could significantly prolong the half-life of polymerized hemoglobin, significantly reduce the degradation rate of polymerized hemoglobin, and significantly enhance the stability of polymerized hemoglobin. The replacement of thioredoxin peroxidase II with thioredoxin (Abcam, China) in the fourth group could not prolong the half-life of polymerized hemoglobin, and the replacement of thioredoxin peroxidase II with superoxide dismutase (ProSpec) in the fifth group also could not prolong the half-life of polymerized hemoglobin, indicating that the synergistic effect of polymerized hemoglobin and thioredoxin peroxidase II in the organ perfusion fluid of the present invention was specific.

Under normothermic mechanical perfusion, the safety time limits for the maintenance of the above indicators were 50min, 20h, 32h, 20h, 20h, 50min in the first group, second group, third group, fourth group, fifth group, and sixth group (as shown in Table 2 below). It could be seen from the third group of the present invention that the combined use of polymerized hemoglobin and thioredoxin peroxidase II could significantly prolong the preservation time of the hearts. The replacement of thioredoxin peroxidase II with thioredoxin in the fourth group could not prolong the preservation time of the hearts, the replacement of thioredoxin peroxidase II with superoxide dismutase in the fifth group also could not prolong the preservation time of the hearts, and using thioredoxin peroxidase II or polymerized hemoglobin alone in the second and sixth groups could not effectively prolong the preservation time of the hearts, indicating that the synergistic effect of polymerized hemoglobin and thioredoxin peroxidase II in the organ perfusion fluid of the present invention was specific.

**Table 2: Comparison of experimental results of isolated rat hearts perfused with perfusion fluids of different formulas**

| Group | First group | Second group | Third group | Fourth group | Fifth group | Sixth group |
|---|---|---|---|---|---|---|
| Formula | Lactated Ringer's Solution | Formula of Example 3 in which thioredoxin peroxidase II was removed | Formula of Example 3 | Formula of Example 3 in which thioredoxin peroxidase II was replaced with thioredoxin | Formula of Example 3 in which thioredoxin peroxidase II was replaced with superoxide dismutase | Formula of Example 3 in which polymerized hemoglobin was removed |
| Half-life of polymerized hemoglobin | | 24h | 32h | 24h | 24h | |
| Safety time limit | 50min | 20h | 32h | 20h | 20h | 50min |

### Comparative Example 3: Comparison of experimental results of isolated dog kidneys perfused with perfusion fluids of different formulas

Experimental dogs (adult Beagle, 7-10kg, purchased from Beijing Experimental Animal Center) were anesthetized, fixed in the middle in a supine position, the tissue was separated after laparotomy, the kidney was exposed and cut, and trimmed, the perfusion instrument was connected and the perfusion was performed at 18°C with a renal artery pressure of 55mmHg. The obtained kidneys were divided into six groups: the first group was administered with the Lactated Ringer's solution; the second group was administered with a perfusion fluid in which the thioredoxin peroxidase II in the formula of Example 3 of the present invention was removed; the third group was administered with the formula of Example 3 of the present invention; the fourth group was administered with a perfusion fluid in which the thioredoxin peroxidase II in the formula of Example 3 of the present invention was replaced with thioredoxin; the fifth group was administered with a perfusion fluid in which the thioredoxin peroxidase II in the formula of Example 3 of the present invention was replaced with superoxide dismutase; and the sixth group was administered with a perfusion fluid in which the polymerized hemoglobin in the formula of Example 3 of the present invention was removed.

For the perfused organs of each group, perfusion fluids were collected every 1 hour from 0h to 120h, and the perfused tissues were collected at a safety time limit point, so as to observe the following indicators:
change levels of Scr, BUN, ET-1 and polymerized hemoglobin half-life in the perfusion fluids;
change levels of NO (nitric oxide) in the tissues;
changes of the tissues observed with electron microscope.

The results showed that: the above-mentioned different perfusion fluids all had protective effect on the perfused kidneys. The perfusion fluids were taken at different perfusion time points for detection, the perfusion maintenance safety time limits were determined on the basis that the content of Scr was not greater than 120µmol/L, the content of BUN was not greater than 7.0mmol/L, the content of ET-1 was not greater than 20ng/L, and the perfusion maintenance safety time limits for the perfused organs in the above groups were 2h, 72h, 108h, 72h, 72h, 2h, respectively. The half-lives of polymerized hemoglobin in the above second, third, fourth and fifth perfusion fluid groups were 36h, 78h, 36h and 36h in sequence. Then a small piece of tissue was cut at the safety time limit of each perfusion fluid group, weighed, cut into pieces, added with a small amount of quartz sands and cold normal saline to homogenize, the homogenate was centrifuged at 10000r/min below 4°C for 20min, the supernatant was taken to determine tissue NO content, the determination results were all not less than the lower limit standard of 3.40umol/L. At the same time, 0.8×0.8×0.2 cm³ tissue was taken at the safety time limit of each perfusion fluid group, pre-fixed with 2.5% glutaraldehyde (0.1M) phosphate buffer of pH 7.4 for 2 hours at 4°C, then put into phosphate buffer of pH 7.38 and rinsed 3 times for 1 hour in total, then dehydrated step-by-step with 50%, 70%, 80%, 90%, 95% acetone, 15 minutes each time, and finally embedded and subjected to polymerization in a 60°C incubator for 48 hours. Ultramicrotome was used to prepare ultrathin sections, double-electron staining was performed with uranyl acetate and lead citrate, and JEM-1200EX electron microscope was used to observe changes in cell morphology and then the changes in organ activity were determined. The electron microscopy results showed that within the safety time limit of each perfusion fluid, the karyotype was roughly normal, the nucleoplasm was evenly distributed, and the mitochondria was slightly swollen, but the cristae arrangement was still good, and individual cristae membrane spaces were slightly widened. There was also mild swelling of the endoplasmic reticulum. The microvilli of the epithelial cells of the proximal convoluted tubules were dropsical, thickened, and exfoliated individually. The capillary endothelium and filtration membrane endothelial cells were slightly dropsical, but the structure was still clear and showed normal state.

### Result analysis:

Under normothermic mechanical perfusion, the half-lives of polymerized hemoglobin in the second, third, fourth, and fifth groups were 36h, 78h, 36h, and 36h in sequence (as shown in Table 3 below). From the comparison of the half-life results of the second group using polymerized hemoglobin alone and the third group of the present invention, it could be seen that the combined use of polymerized hemoglobin and thioredoxin peroxidase II could significantly prolong the half-life of polymerized hemoglobin, significantly reduce the degradation rate of polymerized hemoglobin, and significantly enhance the stability of polymerized hemoglobin. The replacement of thioredoxin peroxidase II with thioredoxin (Abcam, China) in the fourth group could not prolong the half-life of polymerized hemoglobin, and the replacement of thioredoxin peroxidase II with superoxide dismutase (ProSpec) in the fifth group also could not prolong the half-life of polymerized hemoglobin, indicating that the synergistic effect of polymerized hemoglobin and thioredoxin peroxidase II in the organ perfusion fluid of the present invention was specific.

Under normothermic mechanical perfusion, the safety time limits for the maintenance of the above indicators were 2h, 72h, 108h, 72h, 72h, 2h in the first group, second group, third group, fourth group, fifth group, and sixth group (as shown in Table 3 below). It could be seen from the third group of the present invention that the combined use of polymerized hemoglobin and thioredoxin peroxidase II could significantly prolong the preservation time of the kidneys. The replacement of thioredoxin peroxidase II with thioredoxin in the fourth group could not prolong the preservation time of the kidneys, the replacement of thioredoxin peroxidase II with superoxide dismutase in the fifth group also could not prolong the preservation time of the kidneys, and using thioredoxin peroxidase II or polymerized hemoglobin alone in the second and sixth groups could not effectively prolong the preservation time of the kidneys, indicating that the synergistic effect of polymerized hemoglobin and thioredoxin peroxidase II in the organ perfusion fluid of the present invention was specific.

**Table 3: Comparison of experimental results of isolated dog kidneys perfused with perfusion fluids of different formulas**

| Group | First group | Second group | Third group | Fourth group | Fifth group | Sixth group |
|---|---|---|---|---|---|---|
| Formula | Lactated Ringer's Solution | Formula of Example 3 in which thioredoxin peroxidase II was removed | Formula of Example 3 | Formula of Example 3 in which thioredoxin peroxidase II was replaced with thioredoxin | Formula of Example 3 in which thioredoxin peroxidase II was replaced with superoxide dismutase | Formula of Example 3 in which polymerized hemoglobin was removed |
| Half-life of polymerized hemoglobin | | 36h | 78h | 36h | 36h | |
| Safety time limit | 2h | 72h | 108h | 72h | 72h | 2h |

### Comparative Example 4: Comparison of experimental results of discarded human livers perfused with perfusion fluids of different formulas

Discarded human livers were obtained from the hospital, the livers were trimmed to trim the excess tissues in the hepatic hilar region, and the hepatic hilar lymph nodes were removed. The perfusion instrument was connected, the portal vein was perfused in constant flow mode with a flow of 0.5 mL/min/g (liver weight), the hepatic artery was perfused in pressure control mode with a pressure of 80/60 mmHg, and the perfusion was started at 18°C. The obtained livers were divided into six groups: the first group was administered with the Lactated Ringer's solution; the second group was administered with a perfusion fluid in which the thioredoxin peroxidase II in the formula of Example 3 of the present invention was removed; the third group was administered with the formula of Example 3 of the present invention; the fourth group was administered with a perfusion fluid in which the thioredoxin peroxidase II in the formula of Example 3 of the present invention was replaced with thioredoxin; the fifth group was administered with a perfusion fluid in which the thioredoxin peroxidase II in the formula of Example 3 of the present invention was replaced with superoxide dismutase; and the sixth group was administered with a perfusion fluid in which the polymerized hemoglobin in the formula of Example 3 of the present invention was removed.

For the perfused organs of each group, perfusion fluids were collected every 20 minutes from 0h to 1h and every 1 hour from 1h to 72h, and the perfused tissues were collected at a safety time limit point, so as to observe the following indicators:
change levels of AST (aspartate aminotransferase), ALT (alanine aminotransferase), TBIL (total bilirubin), ET-1 (endothelin 1) and polymerized hemoglobin half-life in the perfusion fluids;
change levels of NO (nitric oxide) in the tissues;
changes of the tissues observed with electron microscope.

The results showed that: the above-mentioned different perfusion fluids all had protective effect on the perfused livers. The perfusion fluids were taken at different perfusion time points for detection, the perfusion maintenance safety time limits were determined on the basis that the content of AST was not greater than 40 U/L, the content of ALT was not greater than 40 U/L, the content of TBIL was not greater than 20.5umol/L, and the content of ET-1 was not greater than 20ng/L, and the perfusion maintenance safety time limits for the perfused organs in the above groups were 40min, 18h, 30h, 18h, 18h, 40min, respectively. The half-lives of polymerized hemoglobin in the second, third, fourth and fifth perfusion fluid groups were 20h, 30h, 20h and 20h in sequence. Then a small piece of tissue was cut at the safety time limit of each perfusion fluid group, weighed, cut into pieces, added with a small amount of quartz sands and cold normal saline to homogenize, the homogenate was centrifuged at 10000r/min below 4°C for 20min, the supernatant was taken to determine tissue NO content, the determination results were all not less than the lower limit standard of 1.80umol/L. At the same time, 0.8×0.8×0.2 cm³ tissue was taken at the safety time limit of each perfusion fluid group, pre-fixed with 2.5% glutaraldehyde (0.1M) phosphate buffer of pH 7.4 for 2 hours at 4°C, then put into phosphate buffer of pH 7.38 and rinsed 3 times for 1 hour in total, then dehydrated step-by-step with 50%, 70%, 80%, 90%, 95% acetone, 15 minutes each time, and finally embedded and subjected to polymerization in a 60°C incubator for 48 hours. Ultramicrotome was used to prepare ultrathin sections, double-electron staining was performed with uranyl acetate and lead citrate, and JEM-1200EX electron microscope was used to observe changes in cell morphology and then the changes in organ activity were determined. The electron microscopy results showed that within the safety time limit of each perfusion fluid, the liver lobules were clearly contoured, the hepatic sinusoid in the lobules was arranged radially and anastomosed into a net, there was extensive anastomosis between adjacent liver lobules, and the interlobular artery and the interlobular vein were seen in the portal area, and the terminal branch of the hepatic artery continuously merged into the hepatic sinusoid along the periphery of the liver lobules.

### Result analysis:

Under normothermic mechanical perfusion, the polymerized hemoglobin half-lives of the second, third, fourth, and fifth groups were 20h, 30h, 20h, and 20h in sequence (as shown in Table 4 below). From the comparison of the half-life results of the second group using polymerized hemoglobin alone and the third group of the present invention, it could be seen that the combined use of polymerized hemoglobin and thioredoxin peroxidase II could significantly prolong the half-life of polymerized hemoglobin, significantly reduce the degradation rate of polymerized hemoglobin, and significantly enhance the stability of polymerized hemoglobin. The replacement of thioredoxin peroxidase II with thioredoxin (Abcam, China) in the fourth group could not prolong the half-life of polymerized hemoglobin, and the replacement of thioredoxin peroxidase II with superoxide dismutase (ProSpec) in the fifth group also could not prolong the half-life of polymerized hemoglobin, indicating that the synergistic effect of polymerized hemoglobin and thioredoxin peroxidase II in the organ perfusion fluid of the present invention was specific.

Under normothermic mechanical perfusion, the safety time limits for the maintenance of the above indicators were 40min, 18h, 30h, 18h, 18h, 40min in the first group, second group, third group, fourth group, fifth group, and sixth group (as shown in Table 4 below). It could be seen from the third group of the present invention that the combined use of polymerized hemoglobin and thioredoxin peroxidase II could significantly prolong the preservation time of the livers. The replacement of thioredoxin peroxidase II with thioredoxin in the fourth group could not prolong the preservation time of the liver, the replacement of thioredoxin peroxidase II with superoxide dismutase in the fifth group also could not prolong the preservation time of the liver, and using thioredoxin peroxidase II or polymerized hemoglobin alone in the second and sixth groups could not effectively prolong the preservation time of the liver, indicating that the synergistic effect of polymerized hemoglobin and thioredoxin peroxidase II in the organ perfusion fluid of the present invention was specific.

**Table 4: Comparison of experimental results of discarded human livers perfused with perfusion fluids of different formulas**

| Group | First group | Second group | Third group | Fourth group | Fifth group | Sixth group |
|---|---|---|---|---|---|---|
| Formula | Lactated Ringer's Solution | Formula of Example 3 in which thioredoxin peroxidase II was removed | Formula of Example 3 | Formula of Example 3 in which thioredoxin peroxidase II was replaced with thioredoxin | Formula of Example 3 in which thioredoxin peroxidase II was replaced with superoxide dismutase | Formula of Example 3 in which polymerized hemoglobin was removed |
| Half-life of polymerized hemoglobin | | 20h | 30h | 20h | 20h | |
| Safety time limit | 40min | 18h | 30h | 18h | 18h | 40min |

It should be noted that in the following comparative examples 5-8, when Ringer's solution was used to perfuse a target organ to prepare an injury model, the injury of the target organ was not caused by the injury effect of Ringer's solution on the organ, but it was the injury caused by hypoxic conditions in the target organ, which would secrete injury markers. In the follow-up injury repair experiments, when exchanging new Ringer's solution, a certain secretion time was also required to make the injury markers reach the upper safety limit.

### Comparative Example 5: Comparison of perfusion experiments of isolated pig liver injury repair

Experimental pigs (Bama miniature pigs, 10-12 months old, 20-28kg, purchased from Beijing Shichuangshiji Miniature Pig Breeding Base) were subjected to preoperative fasting for 12h, water deprivation for 6h, anesthetized, fixed on the operating table in a supine position, and incised along abdominal midline to enter the abdomen, the incision reached the sternal xiphoid process and came down to the symphysis pubis, the left and right deltoid ligaments below the diaphragm were released, the common bile duct and pancreatic branches were ligated; the dissociation and acquisition of liver was performed in the protection of the first hepatic hilum, the ligaments around the liver were detached and the thoracic aorta above the thoracic aorta ligation site was cut off, the superior and inferior hepatic vena cava were cut off, the liver was dissociated from the posterior abdominal wall using the severed thoracic aorta as traction, the liver was dissociated upward close to the spine and the peri-hepatic peritoneal tissue and diaphragm were cut off, the aorta was dissociated below the hepatic artery branch, and the abdominal aorta was severed 1 cm below the hepatic artery branch to obtain the liver, the liver was trimmed to trim the excess tissue in the hepatic hilar region, and the hepatic hilar lymph nodes were removed. By connecting the perfusion machine, the portal vein was perfused in constant flow mode, the flow was set to 0.5 mL/min/g (liver weight), the hepatic artery was perfused in pressure control mode, the pressure was 80/60 mmHg, and the perfusion was started at 18°C. First, perfusion was performed with Lactated Ringer's solution, and when the content of AST was greater than 40U/L, the content of ALT was greater than 40U/L, the content of TBIL was greater than 20.5umol/L, and the content of ET-1 was greater than 20ng/L in the perfusion fluid, the livers were divided into four groups: the first group was administered with the Ringer's solution; the second group was administered with a perfusion fluid in which the thioredoxin peroxidase II in the formula of Example 3 of the present invention was removed; the third group was administered with the formula of Example 3 of the present invention; and the fourth group was administered with a perfusion fluid in which the polymerized hemoglobin in the formula of Example 3 of the present invention was removed.

For the perfusion organs in each group, perfusion fluids were collected every 5 minutes from 0h to 1h and every 1 hour from 1h to 72h, and the perfused tissues were collected at a safety time limit point, so as to observe the following indicators:
change levels of AST, ALT, TBIL, ET-1 and polymerized hemoglobin half-life in the perfusion fluids;
change levels of NO (nitric oxide) in the tissues;
changes of the tissues observed under electron microscope.

The results showed that: in the injury model prepared by perfusing the livers with Ringer's solution (the standard was: when the content of AST was greater than 40U/L, the content of ALT was greater than 40U/L, the content of TBIL was greater than 20.5umol/L, and the content of ET-1 was greater than 20ng/L in the perfusion fluid, and the electron microscopy results showed obvious injury characteristics such as unclear contour of the liver lobule and difficulty in distinguishing the interlobular arteries and interlobular veins in the portal area, it was judged as a qualified model), the above four perfusion fluids were used for injury repair perfusion, the perfusion fluids were taken at different perfusion time points for detection, the perfusion maintenance safety time limits were determined on the basis that the content of AST was not greater than 40 U/L, the content of ALT was not greater than 40 U/L, the content of TBIL was not greater than 20.5umol/L, and the content of ET-1 was not greater than 20ng/L, and the perfusion maintenance safety time limits for the perfused organs in the above groups were 25min, 8h, 15h, 25min, respectively. Then a small piece of tissue was cut at the safety time limit of each perfusion fluid group, weighed, cut into pieces, added with a small amount of quartz sands and cold normal saline to homogenize, the homogenate was centrifuged at 10000r/min below 4°C for 20min, the supernatant was taken to determine tissue NO content, the determination results were all not less than the lower limit standard of 1.80umol/L. At the same time, 0.8×0.8×0.2 cm³ tissue was taken at the safety time limit of each perfusion fluid group, pre-fixed with 2.5% glutaraldehyde (0.1M) phosphate buffer of pH 7.4 for 2 hours at 4°C, then put into phosphate buffer of pH 7.38 and rinsed 3 times for 1 hour in total, then dehydrated step-by-step with 50%, 70%, 80%, 90%, 95% acetone, 15 minutes each time, and finally embedded and subjected to polymerization in a 60°C incubator for 48 hours. Ultramicrotome was used to prepare ultrathin sections, double-electron staining was performed with uranyl acetate and lead citrate, and JEM-1200EX electron microscope was used to observe changes in cell morphology and then the changes in organ activity were determined. The electron microscopy results showed that the first and fourth groups had no organ injury repair effect, in which the contours of the liver lobules were still unclear after perfusion, and there were still obvious injury characteristics such as difficulty in distinguishing the interlobular arteries and interlobular veins in the portal area. The second and third groups had organ injury repair effect, in which the electron microscopy showed that the liver lobule had recovered to a clear contour, the hepatic sinusoid in the lobules was arranged radially and anastomosed into a net, there was extensive anastomosis between adjacent liver lobules, and it was restored to the extent that the interlobular arteries and interlobular veins in the portal area were visible, and the terminal branches of the hepatic arteries continued to merge into the hepatic sinusoid along the periphery of the liver lobules, and the recovery of the third group was better than that of the second group in view of the contour recovery degree and regularity.

### Result analysis:

Under normothermic mechanical perfusion, the safety time limits for maintaining the above indicators in the first, second, third, and fourth groups were 25min, 8h, 15h, and 25min respectively (as shown in Table 5 below). It could be seen from the third group of the present invention that the combined use of polymerized hemoglobin and thioredoxin peroxidase II could significantly prolong the preservation time of the liver and had a significant repair effect on injured organs. The second group using polymerized hemoglobin alone could also repair injured organs, but the effect thereof was not as good as that of the perfusion fluid of the present invention in the third group. The first and fourth groups used none of thioredoxin peroxidase II and polymerized hemoglobin or used thioredoxin peroxidase II alone, and thus could not effectively repair injured organs, indicating that the polymerized hemoglobin and thioredoxin peroxidase II in the organ perfusion fluid of the present invention had a good synergistic effect, and had a better repair effect on injured organs.

**Table 5: Comparison of perfusion experimental results of isolated pig liver injury repair**

| Group | First group | Second group | Third group | Fourth group |
|---|---|---|---|---|
| Formula | Lactated Ringer's Solution | Formula of Example 3 in which thioredoxin peroxidase II was removed | Formula of Example 3 | Formula of Example 3 in which polymerized hemoglobin was removed |
| Reperfusion safety time limit | 25min | 8h | 15h | 25min |
| Observation of injury repair effect under electron microscope | None | Normal | Good | None |

### Comparative Example 6: Comparison of perfusion experiment of isolated rat heart injury repair

Rats (Wistar, 9-11 weeks, female 220-240g, male 300-350g, purchased from Beijing Experimental Animal Center) were anesthetized, placed and fixed on the animal table. The abdominal skin was cut, the abdomen was opened along the Hunter's line to the xiphoid process. The intestinal tract was taken and placed on one side, the inferior vena cava was exposed. The rats were injected with the heparinized normal saline through the inferior vena cava, fully heparinized after 1 min, and the abdominal vessels were cut to let blood. Thoracotomy was performed quickly, the thymus tissue was removed to fully expose the heart and large blood vessels. The distal end of the innominate artery of the aorta was dissociated and cut off, the remaining large blood vessels were cut off quickly, the heart was taken and simply trimmed. The isolated heart perfusion system was turned on with a flow rate of about 15ml/min. The aorta was lifted with a microscopic instrument, the perfusion tube was inserted and placed above the aortic valve and coronary artery opening, fixed with a non-invasive vascular clamp, tied and fixed with a silk thread, then the vascular clamp was removed, and perfusion was started at 18°C. First, perfusion was performed with Lactated Ringer's solution, and when the content of CTN was greater than 0.13ug/L, the content of CK-MB was greater than 16U/L, and the content of ANP was greater than 54pmol/L in the perfusion fluid, the hearts were divided into four groups: the first group was administered with the Ringer's solution; the second group was administered with a perfusion fluid in which the thioredoxin peroxidase II in the formula of Example 3 of the present invention was removed; the third group was administered with the formula of Example 3 of the present invention; and the fourth group was administered with a perfusion fluid in which the polymerized hemoglobin in the formula of Example 3 of the present invention was removed.

For the perfusion organs in each group, perfusion fluids were collected at eight main time points every 10 minutes from 0h to 1h and every 1 hour from 1h to 72h, and the perfused tissues were collected at a safety time limit point, so as to observe the following indicators:
change levels of CTN, CK-MB, ANP and polymerized hemoglobin half-life in the perfusion fluids;
change levels of NO (nitric oxide) in the tissues;
changes of the tissues observed under electron microscope.

The results showed that: in the injury model prepared by perfusing the heart with Ringer's solution (the standard was: when the content of CTN was greater than 0.13ug/L, the content of CK-MB was greater than 16U/L, and the content of ANP was greater than 54pmol/L in the perfusion fluid, and the electron microscope results showed obvious injury characteristics: the myocardial matrix network presented an unclear dense honeycomb shape, the muscle cells were located in the muscle cell sheath, the muscle cell sheath presented an irregular round or elliptical structure, and the collagen fibers on the outer surface of the sheath were arranged in a fuzzy mesh shape, and etc., it was judged to be a qualified model), the above four perfusion fluids were used for injury repair perfusion, the perfusion fluids were taken at different perfusion time points for detection, the perfusion maintenance safety time limits were determined on the basis that the content of CTN was not greater than 0.13ug/L, the content of CK-MB was not greater than 16U/L, and the content of ANP was not greater than 54pmol/L, and the perfusion maintenance safety time limits for the perfused organs in the above groups were 30min, 9h, 16h, 30min, respectively. Then a small piece of tissue was cut at the safety time limit of each perfusion fluid group, weighed, cut into pieces, added with a small amount of quartz sands and cold normal saline to homogenize, the homogenate was centrifuged at 10000r/min below 4°C for 20min, the supernatant was taken to determine tissue NO content, the determination results were all not less than the lower limit standard of 2.30umol/L. At the same time, 0.8×0.8×0.2 cm³ tissue was taken at the safety time limit of each perfusion fluid group, pre-fixed with 2.5% glutaraldehyde (0.1M) phosphate buffer of pH 7.4 for 2 hours at 4°C, then put into phosphate buffer of pH 7.38 and rinsed 3 times for 1 hour in total, then dehydrated step-by-step with 50%, 70%, 80%, 90%, 95% acetone, 15 minutes each time, and finally embedded and subjected to polymerization in a 60°C incubator for 48 hours. Ultramicrotome was used to prepare ultrathin sections, double-electron staining was performed with uranyl acetate and lead citrate, and JEM-1200EX electron microscope was used to observe changes in cell morphology and then the changes in organ activity were determined. The electron microscopy results showed that the first and fourth groups had no organ injury repair effect, in which the myocardial matrix network still showed an unclear dense honeycomb shape, the muscle cells were located in the muscle cell sheath, and the muscle cell sheath still showed an irregular round or elliptical structure, the collagen fibers on the outer surface of the sheath were still arranged in a fuzzy mesh shape and other obvious injury characteristics. The second and third groups had an organ injury repair effect, in which the myocardial matrix network presented a clear and dense honeycomb shape again, the muscle cells were located in the muscle cell sheath, and the muscle cell sheath presented a regular round or elliptical structure, the collagen fibers on the outer surface of the sheath were arranged in a clear mesh shape again, the orientation of the collagen fibers on the outer surface of the muscle cell sheath was inconsistent and presented a clear network structure, the diameter of the collagen fibers varied, and the results indicated the restoration to the normal state, and the recovery of the third group was better than that of the second group in view of the contour recovery degree and cell morphology recovery degree.

### Result analysis:

Under normothermic mechanical perfusion, the safety time limits for the maintenance of the above indicators in the first, second, third, and fourth groups were 30min, 9h, 16h, and 30min respectively (as shown in Table 6 below). It could be seen from the third group of the present invention that the combined use of polymerized hemoglobin and thioredoxin peroxidase II could significantly prolong the preservation time of the heart and had a significant repair effect on injured organs. The second group using polymerized hemoglobin alone could also repair injured organs, but the effect thereof was not as good as that of the perfusion fluid of the present invention in the third group. The first and fourth groups used none of thioredoxin peroxidase II and polymerized hemoglobin or used thioredoxin peroxidase II alone, and thus could not effectively repair injured organs, indicating that the polymerized hemoglobin and thioredoxin peroxidase II in the organ perfusion fluid of the present invention had a good synergistic effect, and had a better repair effect on injured organs.

**Table 6: Comparison of perfusion experimental results of isolated rat heart injury repair**

| Group | First group | Second group | Third group | Fourth group |
|---|---|---|---|---|
| Formula | Lactated Ringer's Solution | Formula of Example 3 in which thioredoxin peroxidase II was removed | Formula of Example 3 | Formula of Example 3 in which polymerized hemoglobin was removed |
| Reperfusion safety time limit | 30min | 9h | 16h | 30min |
| Observation of injury repair effect under electron microscope | None | Normal | Good | None |

### Comparative Example 7: Comparison of perfusion experiment of isolated dog kidney injury repair

Experimental dogs (adult Beagle, 7-10kg, purchased from Beijing Experimental Animal Center) were anesthetized, fixed in the middle in a supine position, the tissue was separated after laparotomy, the kidney was exposed and cut, and trimmed, the perfusion instrument was connected and the perfusion was performed at 18°C with a renal artery pressure of 55mmHg. First, perfusion was performed with the Lactated Ringer's solution, and when the content of Scr was greater than 120µmol/L, the content of BUN was greater than 7.0mmol/L, the content of ET-1 was greater than 20ng/L in the perfusion fluid, the kidneys were divided into four groups: the first group was administered with the Ringer's solution; the second group was administered with a perfusion fluid in which the thioredoxin peroxidase II in the formula of Example 3 of the present invention was removed; the third group was administered with the formula of Example 3 of the present invention; and the fourth group was administered with a perfusion fluid in which the polymerized hemoglobin in the formula of Example 3 of the present invention was removed.

For the perfused organs of each group, perfusion fluids were collected every 10 minutes from 0h to 1h and every 1 hour from 1h to 120h, and the perfused tissues were collected at a safety time limit point, so as to observe the following indicators:
change levels of Scr, BUN, ET-1 and polymerized hemoglobin half-life in the perfusion fluids;
change levels of NO (nitric oxide) in the tissues;
changes of the tissues observed with electron microscope.

The results showed that: in the injury model prepared by perfusing the kidneys with Ringer's solution (the standard was: when the content of Scr was greater than 120µmol/L, the content of BUN was greater than 7.0mmol/L, and the content of ET-1 was greater than 20ng/L, and the electron microscopy results showed obvious injury characteristics: the karyotype was roughly normal, the nucleoplasm was unevenly distributed, the mitochondria was severely swollen, but the cristae arrangement was poor, and individual cristae membrane spaces were slightly widened, the endoplasmic reticulum was also severely swollen, the proximal convoluted tubule epithelial cell microvilli were dropsical, thickened and exfoliated more, and the capillary endothelium and filtration membrane endothelial cells were severely dropsical and presented unclear structure, etc., it was judged as a qualified model), the above four perfusion fluids were used for injury repair perfusion, the perfusion fluids were taken at different perfusion time points for detection, the perfusion maintenance safety time limits were determined on the basis that the content of Scr was not greater than 120µmol/L, the content of BUN was not greater than 7.0mmol/L, and the content of ET-1 was not greater than 20ng/L, and the perfusion maintenance safety time limits for the perfused organs in the above groups were 50min, 28h, 46h, 50min, respectively. Then a small piece of tissue was cut at the safety time limit of each perfusion fluid group, weighed, cut into pieces, added with a small amount of quartz sands and cold normal saline to homogenize, the homogenate was centrifuged at 10000r/min below 4°C for 20min, the supernatant was taken to determine tissue NO content, the determination results were all not less than the lower limit standard of 3.40umol/L. At the same time, 0.8×0.8×0.2 cm³ tissue was taken at the safety time limit of each perfusion fluid group, pre-fixed with 2.5% glutaraldehyde (0.1M) phosphate buffer of pH 7.4 for 2 hours at 4°C, then put into phosphate buffer of pH 7.38 and rinsed 3 times for 1 hour in total, then dehydrated step-by-step with 50%, 70%, 80%, 90%, 95% acetone, 15 minutes each time, and finally embedded and subjected to polymerization in a 60°C incubator for 48 hours. Ultramicrotome was used to prepare ultrathin sections, double-electron staining was performed with uranyl acetate and lead citrate, and JEM-1200EX electron microscope was used to observe changes in cell morphology and then the changes in organ activity were determined. The electron microscopy results showed that the first and fourth groups had no organ injury repair effect, the karyotype was roughly normal, the nucleoplasm was unevenly distributed, the mitochondria was severely swollen, but the cristae arrangement was poor, and individual cristae membrane spaces were slightly widened, the endoplasmic reticulum was also severely swollen, the proximal convoluted tubule epithelial cell microvilli were dropsical, thickened and exfoliated more, the capillary endothelium and filtration membrane endothelial cells were severely dropsical, and the structure was unclear and other obvious injury characteristics. The second and third groups had an organ injury repair effect, in which the karyotype was roughly normal, the nucleoplasm distribution was restored to uniform, the mitochondria was restored to slight swelling, the cristae were arranged well, and the individual cristae membrane spaces were slightly widened, the endoplasmic reticulum also restored to mild swelling, the proximal convoluted tubule epithelial cell microvilli restored to slightly dropsical, thickening, and exfoliated individually, the capillary endothelium and filtration membrane endothelial cells restored to slightly dropsical with clearer structure and a normal state, and the recovery of the third group was better than that of the second group in view of the contour recovery degree and cell morphology recovery degree.

### Result analysis:

Under normothermic mechanical perfusion, the safety time limits for maintaining the above indicators in the first, second, third, and fourth groups were 50min, 28h, 46h, and 50min respectively (as shown in Table 7 below). It could be seen from the third group of the present invention that the combined use of polymerized hemoglobin and thioredoxin peroxidase II could significantly prolong the preservation time of the kidney and had a significant repair effect on injured organs. The second group using polymerized hemoglobin alone could also repair injured organs, but the effect thereof was not as good as that of the perfusion fluid of the present invention in the third group. The first and fourth groups used none of thioredoxin peroxidase II and polymerized hemoglobin or used thioredoxin peroxidase II alone, and thus could not effectively repair injured organs, indicating that the polymerized hemoglobin and thioredoxin peroxidase II in the organ perfusion fluid of the present invention had a good synergistic effect, and had a better repair effect on injured organs.

**Table 7: Comparison of perfusion experimental results of isolated dog kidney injury repair**

| Group | First group | Second group | Third group | Fourth group |
|---|---|---|---|---|
| Formula | Lactated Ringer's Solution | Formula of Example 3 in which thioredoxin peroxidase II was removed | Formula of Example 3 | Formula of Example 3 in which polymerized hemoglobin was removed |
| Reperfusion safety time limit | 50min | 28h | 46h | 50min |
| Observation of injury repair effect under electron microscope | None | Normal | Good | None |

### Comparative Example 8: Comparison of perfusion experiments of discarded human liver injury repair

Discarded human livers were obtained from the hospital, the livers were trimmed to trim the excess tissues in the hepatic hilar region, and the hepatic hilar lymph nodes were removed. The perfusion instrument was connected, the portal vein was perfused in constant flow mode with a flow of 0.5 mL/min/g (liver weight), the hepatic artery was perfused in pressure control mode with a pressure of 80/60 mmHg, and the perfusion was started at 18°C. First, perfusion was performed with Lactated Ringer's solution, and when the content of AST was greater than 40U/L, the content of ALT was greater than 40U/L, the content of TBIL was greater than 20.5umol/L, and the content of ET-1 was greater than 20ng/L in the perfusion fluid, the livers were divided into four groups: the first group was administered with the Ringer's solution; the second group was administered with a perfusion fluid in which the thioredoxin peroxidase II in the formula of Example 3 of the present invention was removed; the third group was administered with the formula of Example 3 of the present invention; and the fourth group was administered with a perfusion fluid in which the polymerized hemoglobin in the formula of Example 3 of the present invention was removed.

For the perfused organs of each group, perfusion fluids were collected every 5 minutes from 0h to 1h and every 1 hour from 1h to 72h, and the perfused tissues were collected at a safety time limit point, so as to observe the following indicators:
change levels of AST, ALT, TBIL, ET-1 and polymerized hemoglobin half-life in the perfusion fluids;
change levels of NO (nitric oxide) in the tissues;
changes of the tissues observed with electron microscope.

The results showed that: in the injury model prepared by perfusing the livers with Ringer's solution (the standard was: when the content of AST was greater than 40U/L, the content of ALT was greater than 40U/L, the content of TBIL was greater than 20.5umol/L, and the content of ET-1 was greater than 20ng/L in the perfusion fluid, and the electron microscopy results showed obvious injury characteristics such as unclear contour of the liver lobule, and difficulty in distinguishing the interlobular arteries and interlobular veins in the portal area, it was judged as a qualified model), the above four perfusion fluids were used for injury repair perfusion, the perfusion fluids were taken at different perfusion time points for detection, the perfusion maintenance safety time limits were determined on the basis that the content of AST was not greater than 40 U/L, the content of ALT was not greater than 40 U/L, the content of TBIL was not greater than 20.5umol/L, and the content of ET-1 was not greater than 20ng/L, and the perfusion maintenance safety time limits for the perfused organs in the above groups were 25min, 8h, 15h, 25min, respectively. Then a small piece of tissue was cut at the safety time limit of each perfusion fluid group, weighed, cut into pieces, added with a small amount of quartz sands and cold normal saline to homogenize, the homogenate was centrifuged at 10000r/min below 4°C for 20min, the supernatant was taken to determine tissue NO content, the determination results were all not less than the lower limit standard of 1.80umol/L. At the same time, 0.8×0.8×0.2 cm³ tissue was taken at the safety time limit of each perfusion fluid group, pre-fixed with 2.5% glutaraldehyde (0.1M) phosphate buffer of pH 7.4 for 2 hours at 4°C, then put into phosphate buffer of pH 7.38 and rinsed 3 times for 1 hour in total, then dehydrated step-by-step with 50%, 70%, 80%, 90%, 95% acetone, 15 minutes each time, and finally embedded and subjected to polymerization in a 60°C incubator for 48 hours. Ultramicrotome was used to prepare ultrathin sections, double-electron staining was performed with uranyl acetate and lead citrate, and JEM-1200EX electron microscope was used to observe changes in cell morphology and then the changes in organ activity were determined. The electron microscopy results showed that the first and fourth groups had no organ injury repair effect, in which the contours of the liver lobules were still unclear after perfusion, and there were still obvious injury characteristics such as difficulty in distinguishing the interlobular arteries and interlobular veins in the portal area. The second and third groups had organ injury repair effect, in which the electron microscopy showed that the liver lobule had recovered to a clear contour, the hepatic sinusoid in the lobules was arranged radially and anastomosed into a net , there was extensive anastomosis between adjacent liver lobules, and it was restored to the extent that the interlobular arteries and interlobular veins in the portal area were visible, and the terminal branches of the hepatic arteries continued to merge into the hepatic sinusoid along the periphery of the liver lobules, and the recovery of the third group was better than that of the second group in view of the contour recovery degree and regularity.

### Result analysis:

Under normothermic mechanical perfusion, the safety time limits for maintaining the above indicators in the first, second, third, and fourth groups were 25min, 8h, 15h, and 25min respectively (as shown in Table 8 below). It could be seen from the third group of the present invention that the combined use of polymerized hemoglobin and thioredoxin peroxidase II could significantly prolong the preservation time of the liver and had a significant repair effect on injured organs. The second group using polymerized hemoglobin alone could also repair injured organs, but the effect thereof was not as good as that of the perfusion fluid of the present invention in the third group. The first and fourth groups used none of thioredoxin peroxidase II and polymerized hemoglobin or used thioredoxin peroxidase II alone, and thus could not effectively repair injured organs, indicating that the polymerized hemoglobin and thioredoxin peroxidase II in the organ perfusion fluid of the present invention had a good synergistic effect, and had a better repair effect on injured organs.

**Table 8: Comparison of perfusion experimental results of discarded human liver injury repair**

| Group | First group | Second group | Third group | Fourth group |
|---|---|---|---|---|
| Formula | Lactated Ringer's Solution | Formula of Example 3 in which thioredoxin peroxidase II was removed | Formula of Example 3 | Formula of Example 3 in which polymerized hemoglobin was removed |
| Reperfusion safety time limit | 25min | 8h | 15h | 25min |
| Observation of damage injury repair under electron microscope | None | Normal | Good | None |

The specific examples described above further describe the objectives, technical solutions and beneficial effects of the present invention in detail. It should be understood that the above descriptions are only specific examples of the present invention and are not intended to limit the protection scope of the present invention.

## Claims

1. A perfusion fluid for isolated organ, based on a total volume of 1000 mL, which is composed of the following substances:
based on every 1g of thioredoxin peroxidase II, which comprises:
polymerized hemoglobin: 4 to 5 g;
thioredoxin peroxidase II: 1 g;
heparin sodium: 3000 to 5000 u;
glucose: 1 to 2 g;
sodium chloride: 0.8 to 1.5 g;
cefoxitin sodium: 0.25 to 0.3 g;
sodium bicarbonate: 0.15 to 0.25 g;
10% compound amino acid for injection: 6 to 10 mL;
12 vitamins for injection: 0.025 to 0.03 mL; and
balance of water;
wherein, the polymerized hemoglobin is obtained by the following method:
collecting fresh blood, and diluting it with 6 g/L sodium citrate solution of 0.5 to 1 times the blood volume;
filtering the diluted blood with a 60 µm depth filter, and rinsing the residue on the 60 µm depth filter with 6 g/L sodium citrate solution until the hemoglobin passing through the filter reaches more than 95%;
placing the above material that passes through the 60µm depth filter on a 0.65µm hollow fiber membrane, and rinsing the material on the 0.65µm hollow fiber membrane with 6g/L sodium citrate solution of 5 to 8 times the initial blood volume so that a material smaller than 0.65µm passes through the 0.65µm hollow fiber membrane;
adding water for injection at a ratio of 1:1~2 according to the initial blood volume to the material retained by the 0.65µm hollow fiber membrane to lyse red blood cells, ultrafiltering the lysed red blood cells with a 100KD filter membrane to obtain the desired hemoglobin at the permeation end, and adding water for injection according to the permeation rate to maintain a constant ultrafiltration volume until the yield of hemoglobin is ≥95%, and terminating the 100KD ultrafiltration;
concentrating the above hemoglobin purified by the 100KD filter membrane with a 30KD membrane package to reach a hemoglobin concentration of 10 to 14 g/dl;
purifying the above purified hemoglobin in the concentration of 10 to 14g/dl by anion chromatography to obtain a pure hemoglobin;
placing the pure hemoglobin obtained above on a 30KD filter membrane, and exchanging liquid with a 50 mM disodium hydrogen phosphate buffer of 3 times the volume of the pure hemoglobin;
then introducing an inert gas to perform deoxygenation until the oxyhemoglobin content is less than 5%, adding glutaraldehyde at a ratio of 35 to 45 mg of glutaraldehyde per 1g of hemoglobin by an atomization method, and then adding sodium borohydride at a ratio of 13 to 18 mg of sodium borohydride per 1g of hemoglobin to terminate the polymerization reaction;
subsequently concentrating the obtained polymerized hemoglobin to 6 to 7 g/dL, placing the polymerized hemoglobin that has been concentrated to 6 to 7g/dL on a 30KD ultrafiltration membrane package, exchanging liquid with a Lactated Ringer's solution of 5 to 8 times the volume of the 6 to 7g/dL polymerized hemoglobin to obtain polymerized hemoglobin, introducing an inert gas for deoxygenation until the oxyhemoglobin content is ≤5%, sterilizing with 0.2µm filter to obtain the polymerized hemoglobin;
wherein, the steps of the anion chromatography are as follows:
balancing the column with 20mM tris solution;
finishing the loading of sample in 40min;
washing away impurities with 29mM tris solution of 3 times the volume of the purified hemoglobin in the concentration of 10 to 14g/dl;
eluting with 50mM tris solution of 4 to 5 times the volume of the purified hemoglobin in the concentration of 10 to 14g/dl;
wherein, the Lactated Ringer's solution is composed of the following substances:
sodium chloride 6.73g/L, potassium chloride 0.3g/L, calcium chloride dihydrate 0.2g/L, 40% sodium lactate 3.07g/L, N-acetyl-L-cysteine 22g/L.

2. The perfusion fluid for isolated organ according to claim 1, based on a total volume of 1000 mL, which is composed of the following substances:
polymerized hemoglobin: 30 g,
thioredoxin peroxidase II: 6.7 g,
heparin sodium: 25000 u,
glucose: 9 g,
sodium chloride: 7 g,
cefoxitin sodium: 2 g,
sodium bicarbonate: 1.25 g,
10% compound amino acid for injection: 50 mL,
12 vitamins for injection: 0.2 mL, and
balance of water;
or
polymerized hemoglobin: 40 g,
thioredoxin peroxidase II: 10 g,
heparin sodium: 30000 u,
glucose: 10 g,
sodium chloride: 8 g,
cefoxitin sodium: 3 g,
sodium bicarbonate: 1.5 g,
10% compound amino acid for injection: 60 mL,
12 vitamins for injection: 0.3 mL, and
balance of water;
or
polymerized hemoglobin: 20 g,
thioredoxin peroxidase II: 4 g,
heparin sodium: 20000 u,
glucose: 8 g,
sodium chloride: 6 g,
cefoxitin sodium: 1 g,
sodium bicarbonate: 1 g,
10% compound amino acid for injection: 40 mL,
12 vitamins for injection: 0.1 mL, and
balance of water.

3. The perfusion fluid for isolated organ according to any one of claims 1 to 2, wherein the cefoxitin sodium is cefoxitin sodium for injection; or
the water is water for injection; or
the isolated organ is heart, liver, kidney or lung.

4. The perfusion fluid for isolated organ according to claim 3, wherein the isolated organ is an isolated organ of human, dog, rat or pig.

5. The perfusion fluid for isolated organ according to any one of claims 1 to 4 for use in preserving an isolated organ for transplantation, the organ being an organ isolated from a circulatory system; or in alleviating or repairing dysfunction of the isolated organ for transplantation.

6. The perfusion fluid for isolated organ for use according to claim 5, wherein the preservation, the alleviation or the repair is performed at 2 to 40°C; or
the isolated organ is heart, liver, kidney or lung.

7. The perfusion fluid for isolated organ for use according to claim 6, wherein the isolated organ is an isolated organ of human, dog, rat or pig.

8. The perfusion fluid for isolated organ for use according to claim 6, wherein the preservation, the alleviation or the repair is performed at 4 to 37°C.

9. The perfusion fluid for isolated organ for use according to claim 6, wherein the preservation, the alleviation or the repair is performed at 10 to 30°C.

10. The perfusion fluid for isolated organ for use according to claim 6, wherein the preservation, the alleviation or the repair is performed at 16 to 20°C.

11. The perfusion fluid for isolated organ for use according to claim 6, wherein the preservation, the alleviation or the repair is performed at 18°C.

## Patentansprüche

1. Perfusionsflüssigkeit für ein isoliertes Organ, basierend auf einem Gesamtvolumen von 1000 ml, die aus den folgenden Substanzen besteht:
basierend auf jeweils 1 g Thioredoxin-Peroxidase II, die umfasst:
polymerisiertes Hämoglobin: 4 bis 5 g;
Thioredoxin-Peroxidase II: 1 g;
Heparin-Natrium: 3000 bis 5000 u;
Glukose: 1 bis 2 g;
Natriumchlorid: 0,8 bis 1,5 g;
Cefoxitin-Natrium: 0,25 bis 0,3 g;
Natriumbicarbonat: 0,15 bis 0,25 g;
10%ige Aminosäuremischung für Injektionszwecke: 6 bis 10 ml;
12 Vitamine für Injektionszwecke: 0,025 bis 0,03 ml und
Rest Wasser;
wobei das polymerisierte Hämoglobin durch das folgende Verfahren erhalten wird:
Sammeln von frischem Blut und Verdünnen desselben mit 6 g/l Natriumcitratlösung mit dem 0,5- bis 1-Fachen des Blutvolumens;
Filtern des verdünnten Blutes mit einem 60-µm-Tiefenfilter und Spülen des Rückstands auf dem 60-µm-Tiefenfilter mit 6 g/l Natriumcitratlösung, bis dass das den Filter passierende Hämoglobin mehr als 95 % erreicht;
Aufbringen des oben genannten Materials, das den 60-µm-Tiefenfilter passiert hat, auf eine 0,65-µm-Hohlfasermembran und Spülen des Materials auf der 0,65-µm-Hohlfasermembran mit 6 g/l Natriumcitratlösung mit dem 5- bis 8-Fachen des ursprünglichen Blutvolumens, sodass ein Material, das kleiner als 0,65 µm ist, die 0,65-µm-Hohlfasermembran passiert;
Zugeben von Wasser für Injektionszwecke in einem Verhältnis von 1:1~2 entsprechend dem ursprünglichen Blutvolumen zu dem von der 0,65-µm-Hohlfasermembran zurückgehaltenen Material, um die roten Blutkörperchen zu lysieren, Ultrafiltrieren der lysierten roten Blutkörperchen mit einer 100-kDa-Filtermembran, um das gewünschte Hämoglobin am Permeationsende zu erhalten, und Zugeben von Wasser für Injektionszwecke entsprechend der Permeationsrate, um ein konstantes Ultrafiltrationsvolumen aufrechtzuerhalten, bis die Hämoglobinausbeute ≥ 95 % beträgt, und Beenden der 100-kDa-Ultrafiltration;
Konzentrieren des oben genannten, durch die 100-kDa-Filtermembran gereinigten Hämoglobins mit einem 30-kDa-Membranpaket, um eine Hämoglobinkonzentration von 10 bis 14 g/dl zu erreichen;
Reinigen des oben genannten gereinigten Hämoglobins in der Konzentration von 10 bis 14 g/dl durch Anionenchromatographie, um ein reines Hämoglobin zu erhalten;
Aufbringen des oben erhaltenen reinen Hämoglobins auf eine 30-kDa-Filtermembran und Austauschen der Flüssigkeit durch einen 50-mM-Dinatriumhydrogenphosphat-Puffer mit dem 3-Fachen des Volumens des reinen Hämoglobins;
anschließendes Einleiten eines Inertgases zur Durchführung einer Desoxygenierung, bis der Oxyhämoglobingehalt weniger als 5 % beträgt, Zugeben von Glutaraldehyd in einem Verhältnis von 35 bis 45 mg Glutaraldehyd pro 1 g Hämoglobin mittels eines Zerstäubungsverfahrens, und anschließendes Zugeben von Natriumborhydrid in einem Verhältnis von 13 bis 18 mg Natriumborhydrid pro 1 g Hämoglobin, um die Polymerisationsreaktion zu beenden;
nachfolgendes Konzentrieren des erhaltenen polymerisierten Hämoglobins auf 6 bis 7 g/dl, Aufbringen des auf 6 bis 7 g/dl konzentrierten polymerisierten Hämoglobins auf eine 30-kDa-Ultrafiltrationsmembranpackung, Austauschen der Flüssigkeit durch eine Ringer-Lactat-Lösung mit dem 5-bis 8-Fachen des Volumens der 6 bis 7 g/dl an polymerisiertem Hämoglobin, um polymerisiertes Hämoglobin zu erhalten, Einleiten eines Inertgases zur Desoxygenierung, bis der Oxyhämoglobingehalt ≤ 5 % beträgt, Sterilisieren mit einem 0,2-µm-Filter, um das polymerisierte Hämoglobin zu erhalten;
wobei die Schritte der Anionenchromatographie wie folgt sind:
Ausgleichen der Säule mit 20-mM-Tris-Lösung;
Beenden der Beladung der Probe nach 40 Minuten;
Auswaschen von Verunreinigungen mit 29-mM-Tris-Lösung mit dem 3-Fachen des Volumens des gereinigten Hämoglobins in der Konzentration von 10 bis 14 g/dl; Eluieren mit 50-mM-Tris-Lösung mit dem 4- bis 5-Fachen des Volumens des gereinigten Hämoglobins in der Konzentration von 10 bis 14 g/dl;
wobei die Ringer-Lactat-Lösung aus den folgenden Substanzen besteht:
Natriumchlorid 6,73 g/l, Kaliumchlorid 0,3 g/l, Calciumchlorid-Dihydrat 0,2 g/l, 40 % Natriumlactat 3,07 g/l, N-Acetyl-L-Cystein 22 g/l.

2. Perfusionsflüssigkeit für ein isoliertes Organ nach Anspruch 1, basierend auf einem Gesamtvolumen von 1000, die aus den folgenden Substanzen besteht:
polymerisiertes Hämoglobin: 30 g,
Thioredoxin-Peroxidase II: 6,7 g,
Heparin-Natrium: 25 000 u,
Glukose: 9 g,
Natriumchlorid: 7 g,
Cefoxitin-Natrium: 2 g,
Natriumbicarbonat: 1,25 g,
10%ige Aminosäuremischung für Injektionszwecke: 50 ml,
12 Vitamine für Injektionszwecke: 0,2 ml und
Rest Wasser;
oder
polymerisiertes Hämoglobin: 40 g,
Thioredoxin-Peroxidase II: 10 g,
Heparin-Natrium: 30 000 u,
Glukose: 10 g,
Natriumchlorid: 8 g,
Cefoxitin-Natrium: 3 g,
Natriumbicarbonat: 1,5 g,
10%ige Aminosäuremischung für Injektionszwecke: 60 ml,
12 Vitamine für Injektionszwecke: 0,3 ml und
Rest Wasser;
oder
polymerisiertes Hämoglobin: 20 g,
Thioredoxin-Peroxidase II: 4 g,
Heparin-Natrium: 20 000 u,
Glukose: 8 g,
Natriumchlorid: 6 g,
Cefoxitin-Natrium: 1 g,
Natriumbicarbonat: 1 g,
10%ige Aminosäuremischung für Injektionszwecke: 40 ml,
12 Vitamine für Injektionszwecke: 0,1 ml und
Rest Wasser.

3. Perfusionsflüssigkeit für ein isoliertes Organ nach einem der Ansprüche 1 bis 2, wobei das Cefoxitin-Natrium Cefoxitin-Natrium für Injektionszwecke ist; oder
das Wasser Wasser für Injektionszwecke ist; oder
das isolierte Organ ein Herz, eine Leber, eine Niere oder eine Lunge ist.

4. Perfusionsflüssigkeit für ein isoliertes Organ nach Anspruch 3, wobei das isolierte Organ ein isoliertes Organ eines Menschen, eines Hundes, einer Ratte oder eines Schweins ist.

5. Perfusionsflüssigkeit für ein isoliertes Organ nach einem der Ansprüche 1 bis 4 zur Verwendung bei der Konservierung eines isolierten Organs für die Transplantation, wobei das Organ ein aus einem Kreislaufsystem isoliertes Organ ist; oder bei der Linderung oder Reparatur einer Funktionsstörung des isolierten Organs für die Transplantation.

6. Perfusionsflüssigkeit für ein isoliertes Organ zur Verwendung nach Anspruch 5, wobei die Konservierung, Linderung oder Reparatur bei 2 bis 40 °C durchgeführt wird; oder
das isolierte Organ ein Herz, eine Leber, eine Niere oder eine Lunge ist.

7. Perfusionsflüssigkeit für ein isoliertes Organ zur Verwendung nach Anspruch 6, wobei das isolierte Organ ein isoliertes Organ eines Menschen, eines Hundes, einer Ratte oder eines Schweins ist.

8. Perfusionsflüssigkeit für ein isoliertes Organ zur Verwendung nach Anspruch 6, wobei die Konservierung, Linderung oder Reparatur bei 4 bis 37 °C durchgeführt wird.

9. Perfusionsflüssigkeit für ein isoliertes Organ zur Verwendung nach Anspruch 6, wobei die Konservierung, Linderung oder Reparatur bei 10 bis 30 °C durchgeführt wird.

10. Perfusionsflüssigkeit für ein isoliertes Organ zur Verwendung nach Anspruch 6, wobei die Konservierung, Linderung oder Reparatur bei 16 bis 20 °C durchgeführt wird.

11. Perfusionsflüssigkeit für ein isoliertes Organ zur Verwendung nach Anspruch 6, wobei die Konservierung, Linderung oder Reparatur bei 18 °C durchgeführt wird.

## Revendications

1. Fluide de perfusion pour organe isolé, basé sur un volume total de 1 000 mL, qui est composé des substances suivantes :
sur la base de chaque 1 g de thioredoxine peroxydase II, qui comprend :
de l'hémoglobine polymérisée : 4 à 5 g ;
de la thioredoxine peroxydase II : 1 g ;
de l'héparine de sodium : 3 000 à 5 000 u ;
du glucose : 1 à 2 g ;
du chlorure de sodium : 0,8 à 1,5 g ;
de la céfoxitine de sodium : 0,25 à 0,3 g ;
du bicarbonate de sodium : 0,15 à 0,25 g ;
un composé acide aminé pour injection à 10 % : 6 à 10 mL ;
12 vitamines pour injection : 0,025 à 0,03 mL ; et
le reste de l'eau
l'hémoglobine polymérisée étant obtenue par le procédé suivant :
collecte de sang frais et sa dilution avec 6 g/L d'une solution de citrate de sodium de 0,5 à 1 fois le volume sanguin ;
filtration du sang dilué avec un filtre de 60 µm de profondeur et rinçage du résidu sur le filtre de 60 µm de profondeur avec 6 g/L d'une solution de citrate de sodium jusqu'à ce que l'hémoglobine passant à travers le filtre atteigne plus de 95 % ;
placement du matériau ci-dessus qui passe à travers le filtre de 60 µm de profondeur sur une membrane à fibre creuse de 0,65 µm et rinçage du matériau sur la membrane à fibre creuse de 0,65 µm avec 6 g/L d'une solution de citrate de sodium de 5 à 8 fois le volume de sang initial de sorte qu'un matériau plus petit que 0,65 µm passe à travers la membrane à fibre creuse de 0,65 µm ;
addition d'eau pour injection à un rapport de 1:1 2 selon le volume de sang initial au matériau retenu par la membrane à fibre creuse de 0,65 µm pour lyser des globules rouges, ultrafiltration des globules rouges lysés avec une membrane à filtre de 100 KD pour obtenir l'hémoglobine souhaitée à l'extrémité de perméation et addition d'eau pour injection selon la vitesse de perméation pour maintenir un volume d'ultrafiltration constant jusqu'à ce que le rendement d'hémoglobine soit ≥ 95 % et la terminaison de l'ultrafiltration à 100 KD ;
la concentration de l'hémoglobine ci-dessus purifiée par la membrane à filtre de 100 KD avec un paquet de membrane à 30 KD pour atteindre une concentration d'hémoglobine de 10 à 14 g/dl ;
la purification de l'hémoglobine purifiée ci-dessus à la concentration de 10 à 14 g/dl par chromatographie d'anions pour obtenir une hémoglobine pure ;
le placement de l'hémoglobine pure obtenue ci-dessus sur une membrane à filtre de 30 KD et échange de liquide avec un tampon hydrogénophosphate disodique de 50 mM de 3 fois le volume de l'hémoglobine pure ;
puis l'introduction d'un gaz inerte pour effectuer une désoxygénation jusqu'à ce que la teneur en oxyhémoglobine soit de moins de 5 %, addition de glutaraldéhyde à un rapport de 35 à 45 mg de glutaraldéhyde par 1 g d'hémoglobine par un procédé d'atomisation, puis addition de borohydrure de sodium à un rapport de 13 à 18 mg de borohydrure de sodium par 1 g d'hémoglobine pour terminer la réaction de polymérisation ;
ensuite concentration de l'hémoglobine polymérisée obtenue à 6 à 7 g/dL, placement de l'hémoglobine polymérisée qui a été concentrée à 6 à 7 g/dL sur un paquet de membrane d'ultrafiltration de 30 KD, échange de liquide avec une solution de Ringer lactée de 5 à 8 fois le volume de l'hémoglobine polymérisée à 6 à 7 g/dL pour obtenir l'hémoglobine polymérisée, introduction d'un gaz inerte pour la désoxygénation jusqu'à ce que la teneur en oxyhémoglobine soit ≤ 5 %, stérilisation avec un filtre de 0,2 mm pour obtenir l'hémoglobine polymérisée ;
les étapes de la chromatographie d'anions étant comme suit :
équilibrage de la colonne avec une solution de tris 20 mM ;
finissage du chargement de l'échantillon en 40 minutes ;
lavage des impuretés avec une solution de tris de 29 mM de 3 fois le volume de l'hémoglobine purifiée à la concentration de 10 à 14 g/dl ;
l'élution avec une solution de tris 50 mM de 4 à 5 fois le volume de l'hémoglobine purifiée à la concentration de 10 à 14 g/dl ;
la solution de Ringer lactée étant composée des substances suivantes :
chlorure de sodium 6,73 g/L, chlorure de potassium 0,3 g/L, chlorure de calcium dihydrate 0,2 g/L, lactate de sodium 40 % 3,07 g/L, N-acétyl-L-cystéine 22 g/L.

2. Fluide de perfusion pour organe isolé selon la revendication 1, basé sur un volume total de 1 000 mL, qui est composé des substances suivantes :
hémoglobine polymérisée : 30 g ;
thioredoxine peroxydase II : 6,7 g ;
héparine de sodium : 25 000 u ;
glucose : 9 g ;
chlorure de sodium : 7 g ;
céfoxitine de sodium : 2 g ;
bicarbonate de sodium : 1,25 g ;
composé acide aminé à 10 % pour injection : 50 mL ;
12 vitamines pour injection : 0,2 mL ; et
le reste de l'eau
ou
hémoglobine polymérisée : 40 g ;
thioredoxine peroxydase II : 10 g ;
héparine de sodium : 30 000 u ;
glucose : 10 g ;
chlorure de sodium : 8 g ;
céfoxitine de sodium : 3 g ;
bicarbonate de sodium : 1,5 g ;
composé acide aminé à 10 % pour injection : 60 mL ;
12 vitamines pour injection : 0,3 mL ; et
le reste de l'eau ;
ou
hémoglobine polymérisée : 20 g ;
thioredoxine peroxydase II : 4 g ;
héparine de sodium : 20 000 u ;
glucose : 8 g ;
chlorure de sodium : 6 g ;
céfoxitine de sodium : 1 g ;
bicarbonate de sodium : 1 g ;
composé acide aminé à 10 % pour injection : 40 mL ;
12 vitamines pour injection : 0,1 mL ; et
le reste de l'eau.

3. Fluide de perfusion pour organe isolé selon l'une quelconque des revendications 1 à 2, dans lequel la céfotoxine de sodium est une céfotoxine de sodium pour injection ; ou
l'eau est une eau pour injection ; ou
l'organe isolé est le cœur, le foie, le rein ou le poumon.

4. Fluide de perfusion pour organe isolé selon la revendication 3, dans lequel l'organe isolé est un organe isolé d'être humain, de chien, de rat ou de cochon.

5. Fluide de perfusion pour organe isolé selon l'une quelconque des revendications 1 à 4 destiné à être utilisé dans la préservation d'un organe isolé pour une greffe, l'organe étant un organe isolé d'un système circulatoire ou dans le soulagement ou la réparation du dysfonctionnement de l'organe isolé pour une greffe.

6. Fluide de perfusion pour organe isolé destiné à être utilisé selon la revendication 5, dans lequel la préservation, le soulagement ou la réparation est effectué à 2 à 40 °C ; ou
l'organe isolé est le cœur, le foie, le rein ou le poumon.

7. Fluide de perfusion pour organe isolé destiné à être utilisé selon la revendication 6, dans lequel l'organe isolé est un organe isolé d'être humain, de chien, de rat ou de cochon.

8. Fluide de perfusion pour organe isolé destiné à être utilisé selon la revendication 6, dans lequel la préservation, le soulagement ou la réparation est effectué à 4 à 37 °C.

9. Fluide de perfusion pour organe isolé destiné à être utilisé selon la revendication 6, dans lequel la préservation, le soulagement ou la réparation est effectué à 10 à 30 °C.

10. Fluide de perfusion pour organe isolé destiné à être utilisé selon la revendication 6, dans lequel la préservation, le soulagement ou la réparation est effectué à 16 à 20 °C.

11. Fluide de perfusion pour organe isolé destiné à être utilisé selon la revendication 6, dans lequel la préservation, le soulagement ou la réparation est effectué à 18 °C.
